# EUROPÄISCHE PATENTSCHRIFT

(11) **EP 1 333 196 B1**
(45) Veröffentlichungstag und Bekanntmachung des Hinweises auf die Patenterteilung: **13.02.2008**
(21) Anmeldenummer: 02027348.8
(22) Anmeldetag: 07.12.2002
(51) Int. Cl.: F16H 59/04

(54) **Lageranordnung zur schwenkbaren Lagerung eines Schalthebels**
Bearing assembly for pivotable gear shift lever
Dispositif de support pour levier pivotant de changement de vitesse

(30) Priorität: 31.01.2002 US 353555 P; 02.02.2002 DE 10204282
(43) Veröffentlichungstag der Anmeldung: 06.08.2003
(60) Teilanmeldung: 07117863.6
(73) Patentinhaber: Schaeffler KG, 91074 Herzogenaurach (DE)
(72) Erfinder: Krämer, Klaus, 91460 Baudenbach (DE); Pintus, Susanne, 91074 Herzogenaurach (DE)

(56) Entgegenhaltungen:
- EP-A- 0 849 506
- DE-A1- 4 242 456
- DE-C1- 3 125 632
- DE-C1- 4 309 861
- US-A- 2 684 600
- US-A- 5 950 493

## Beschreibung

### Gebiet der Erfindung

Die Erfindung betrifft eine Lageranordnung zur schwenkbaren Lagerung eines Schalthebels mittels einer Konsole in einem Gehäuse, wobei die Lageranordnung den Schalthebel in der Konsole um eine Schwenkachse zu der Konsole schwenkbar lagert sowie den Schalthebel mit der Konsole um eine quer zur Schwenkebene ausgerichtete Kippachse schwenkbar zu dem Gehäuse lagert und wobei der Schalthebel an einem freien Ende einen um die Kippachse sowie die Schwenkachse schwenkbaren Schaltfinger aufweist, wobei die Kippachse und die Schwenkachse zueinander beabstandet verlaufen.

### Hintergrund der Erfindung

DE 43 09 861 C1 beschreibt eine Schaltvorrichtung zum Schalten von Gangrädern mittels eines Schalthebels. Eines oder zwei auf einer Getriebewelle liegende wahlweise schaltbare Gangräder sind jeweils einer Gasse zugeordnet. Durch die Schaltvorrichtung sind mehrere Gangräder schaltbar. Mindestens ein Gangrad oder maximal zwei Gangräder sind einer Gasse zugeordnet. Jedes Gangrad ist nur in seiner vorbestimmten Gasse schaltbar.

Der Schalthebel ist mittels einer Lageranordnung zu einem Gehäuse schwenkbar angeordnet. Die Lageranordnung ermöglicht Schwenkbewegungen des Schalthebels in einer Wählebene und in einer quer zur Wählebene ausgerichteten Schaltebene. Während der Wähl- und Schaltvorgänge ist der Schalthebel mittels einer Kulisse geführt.

Der Schalthebel steht in der Wählebene in einer Neutralstellung und ist in der Wählebene aus der Neutralstellung durch die Wahl von Gassen wahlweise in eine von mindestens zwei Ruhestellungen schwenkbar. Steht der Schalthebel in einer der Ruhestellungen, ist eine Gasse gewählt. Aus der Ruhestellung ist der Schalthebel in der Schaltebene zum Schalten eines der Gängen in eine Schaltstellung schwenkbar. Die Neutralstellung des Schalthebels ist zumeist auch eine der Ruhestellungen, aus der wahlweise einer von zwei Gängen schaltbar ist.

In den Ruhestellungen bzw. in der Neutralstellung des Schalthebels stehen Schaltschienen in einer mittleren neutralen Stellung, in welcher die mittels der Schaltschienen schaltbaren Gänge nicht geschaltet sind. Der Schalthebel ist an einem freien Ende mit einem Schaltfinger versehen. Jede der Schaltschienen weist eine Eingriffsnut bzw. ein Schaltmaul für den Eingriff des Schaltfingers auf. Durch Wählbewegungen des Schalthebels wird ein wahlweiser Eingriff in eine von mindestens zwei achsparallelen Schaltschienen vorgenommen. Der Schalthebel ist in diesen Stellungen mit einer der Schaltschienen beweglich gekoppelt.

Ein Schwenken des Schalthebels in der Schaltebene aus der Ruhestellung in die eine oder andere Richtung hat ein Verschieben der mit dem Schalthebel gekoppelten Schaltschiene zur Folge, da der Schaltfinger eine die Eingriffsnut begrenzende Flanke beaufschlagt. Einer der Schaltschiene zugeordneten Gänge wird durch das Verschieben der Schaltschiene eingelegt.

Der in DE 31 25 632 beschriebene Schalthebel ist zu einem fahrzeugfesten Gehäuse mittels eines kardanisch ausgeführten Gelenkes schwenkbar aufgenommen. Dieses Gelenk bzw. diese Lageranordnung sieht eine kastenförmig ausgebildete Konsole vor. Die Konsole nimmt den Schalthebel auf und ist mittels des Schalthebels um eine quer zur Schwenkachse ausgerichtete Kippachse an dem zu fahrzeugfesten Gehäuse schwenkbar gelagert. Die Kippachse fluchtet mit der Mittenachse von wahlweise einem oder zwei Kippbolzen. Die Kippbolzen lagern die Konsole in der Wählebene, jedoch nicht in der Schaltebene, schwenkbar an dem Gehäuse. Der Schalthebel ist in der Wählebene, in der Konsole unbeweglich, mit der Konsole um die Kippachse schwenkbar. Bei einer Wählbewegung an dem Schaltfinger nimmt der um die Kippachse schwenkende Schalthebel die Konsole mit. Der Schaltfinger ist an der zum Schaltangriff (Schaltknauf) entgegengesetzten Seite der Kippachse am Schalthebel angeordnet und schwenkt mit dem Schalthebel in der Wählebene um die Kippachse.

Die Lageranordnung sieht weiterhin eine schwenkbare Lagerung des Schalthebels in der Schaltebene um eine Schwenkachse in der Konsole vor. Die Schwenkachse verläuft quer zur Kippachse. Die Schwenkachse ist gleichzeitig die Mittenachse von einem in der Konsole angeordneten Schwenkbolzen. Der Schalthebel ist um den Schwenkbolzen in der Schaltebene, jedoch nicht in der Wählebene, an der Konsole gelagert. Der Schaltfinger ist am entgegensetzten Ende des Schalthebels zu der Schwenkachse angeordnet sowie in der Schaltebene, jedoch nicht in der Wählebene, um die Schwenkachse schwenkbar in der Konsole gelagert. Die Schwenkachse und die Kippachse liegen sich kreuzend in einer gemeinsamen Ebene.

Diese an sich zufriedenstellende Lösung hat den Nachteil, dass aufgrund der in einer Ebene liegenden Schwenk- und Kippachse des Schalthebels der Abstimmung von Schaltkräften und Schaltwegen Grenzen gesetzt sind. Unter Schaltkräften sind die Kräfte zu verstehen, die am Kraftangriff durch den Bediener (Schaltknauf) am Schalthebel beim Wählen und Schalten spürbar sind.

Der Schalthebel legt beim Wählen und Schalten an seinem Kraftangriff definierte Wege zurück. Damit legt auch jeder weitere Punkt an dem Hebel zwischen dem Kraftangriff und der Schwenk- bzw. Kippachse definierte durch seinen Abstand zu den Achsen vorgegebene Wege zurück. Der Weg, zumeist im Bogenmaß, ist von dem Abstand des Schaltknaufs zu den Achsen abhängig. Bei gleichem Schwenkwinkel des Schalthebels um die Kippachse oder Schwenkachse liegt jeder der Punkte, unabhängig davon ob er um die Kippachse oder die Schwenkachse geschwenkt ist, gleiche Wege zurück. Der Schalthebel ist häufig durch eine zwischen dem Kraftangriff und den Achsen gelegene Schaltkulisse geführt. Der Gestaltung von material- und platzsparenden Kulissen sind aufgrund der gleichen Wege des Schalthebels in der Kulisse bei Wähl- und Schaltbewegungen häufig Grenzen gesetzt. Die Schaltkräfte am Schaltknauf sind über das Hebelverhältnis des Schalthebels beeinflussbar. Das Hebelverhältnis ergibt sich aus dem Abstand vom Knauf zu den Achsen und aus dem Abstand von den Achsen zu dem Eingriff des Schaltfingers in die Eingriffsnut der Schaltschiene. Der Länge des in den Fahrgastraum ragenden Schalthebels sind bauraumbedingt in der Regel Grenzen gesetzt. Die Länge des Schaltfingers, ausgehend von den sich kreuzenden Achsen, ist von der Lage der sich dem Schalthebel anschließenden Elemente der inneren Schaltung abhängig.

Der schwenkende Schalthebel ist beim Wählen der Gasse und beim Schalten der Gänge durch Führungsbahnen, z. B. einer Kulisse, geführt. Die Schwenkbewegungen des Schalthebels in Wähl- und Schaltrichtung sind durch Anschläge begrenzt. Die Anschläge sichern ab, dass der Schaltfinger nach dem Abschluss des Wählens einer Gasse exakt in eine der Eingriffsnuten einer der Schaltschienen eingreift. Die den Schaltweg des Schaltfingers begrenzenden Anschläge sichern ab, dass die Schaltschiene exakt in ihre vorgegebene Position und nicht darüber hinaus verschoben wird.

Während eines Schaltvorganges ist nur ein Gangrad schaltbar. Sind zwei Gangräder einer Gasse zugeordnet, ist eines der Gangräder in der Gasse von vornherein nicht schaltbar oder mittels einer Sperreinrichtung in der Gasse gesperrt, während das andere geschaltet wird. Je nach der Ausführung der Schaltvorrichtung sind die weiteren zu der gewählten Gasse benachbarten Gassen gegen unbeabsichtigtes oder selbsttätiges Wählen gesperrt. Ein falsches Wählen bzw. Schalten ist auszuschließen. Die Gangräder in dem zu der gewählten Gasse benachbarten Gassen sind während des Schaltens eines Gangrades und bei eingelegtem Gang gegen unbeabsichtigtes oder selbsttätiges Schalten gesperrt. Der Rückwärtsgang ist in der Regel gegen ein unbeabsichtigtes Anwählen oder Schalten aus einer der Schaltstellungen bzw. Wählpositionen für das Schalten bzw. die Wahl der Vorwärtsgänge gesperrt.

Andere Vorrichtungen sehen eine Einrichtung für eine spürbare Erhöhung der Schaltkraft an dem Schalthebel vor. Die Einrichtung ist der Gasse des Rückwärtsganges zugeordnet. Der Bediener wird mittels der am Schalthebel deutlich ansteigenden Schaltkraft beim Anwählen der Gasse des Rückwärtsganges informiert, dass er im Begriff ist, den Rückwärtsgang einzulegen. Die Orientierung des Bedieners über die Stellung des Schalthebels zu dem Getriebe ist damit erleichtert. Das mit der ansteigenden Wählkraft abgegebene Signal an den Bediener wird insbesondere genutzt, um den Bediener vor unbeabsichtigten Wechseln aus einer Gasse für die Vorwärtsgänge in die Gasse für den Rückwärtsgang zu warnen. Diese sogenannte Schlagsperre wirkt bei unbeabsichtigtem Wählen aber auch bei beabsichtigtem Wählen Gasse des Rückwärtsganges. Eine kurze sprungartig ansteigende Wählkraft am Hebel signalisiert den Wechsel. Die Wählkraft ist in dem Moment wesentlich höher als die Kräfte, die beim Wählen der Gassen der Vorwärtsgänge am Schaltknauf auftreten. Nach dem Überwinden der erhöhten Wählkraft sinkt die Betätigungskraft wieder auf ein normales Niveau.

In US 4,567,785 ist eine Vorrichtung offenbart, bei der Kippachse und die Schwenkachse zueinander beabstandet verlaufen. Eine raum- und kostensparende Begrenzung des Schwenk- bzw. Kipphebelwegs ist nicht vorgesehen. Die DE-A 42 42 456 zeigt die Merkmale des Oberbegriffs des Anspruchs 1.

### Zusammenfassung der Erfindung

Die Aufgabe der Erfindung ist es daher, eine Lageranordnung für einen in zwei Ebenen schwenkbaren Schalthebel einer Schalteinrichtung zu schaffen, mit der die vorgenannten Nachteile vermieden werden und die sich einfach herstellen lässt sowie mit der der Aufwand zur Montage einer die Schaltschienen betätigenden Schalteinrichtung reduziert ist.

Diese Aufgabe ist nach dem Gegenstand des kennzeichnenden Teils des Anspruchs 1 dadurch gelöst, dass die Lageranordnung an der Konsole wenigstens ein Langloch aufweist, wobei das Langloch sich in die Schwenkrichtung des um die Schwenkachse schwenkbaren Schalthebels erstreckt und dass in das Langloch ein aus dem Schalthebel hervorstehender Anschlag eingreift, wobei der Anschlag zu der Schwenkachse beabstandet ist und wobei der Anschlag in dem Langloch den Schwenkwinkel des um die Schwenkachse schwenkenden Schalthebels begrenzt. Die den Schwenkwinkel des Schalthebels in Wähl- und Schaltrichtung begrenzenden Anschläge sind somit in der Lageranordnung integriert. Der Schwenkwinkel bei Schaltbewegungen des Schalthebels wird an der Konsole mittels wenigstens eines Langloches begrenzt, in das ein aus dem Schalthebel hervorstehender Anschlag eingreift. Das Langloch ist bogenförmig und sich in Schwenkrichtung des Schalthebels beim Schalten einer der Gänge erstreckend ausgebildet. Alternativ dazu weist der Schalthebel eine langlochartig ausgearbeitete Ausnehmung auf, in die ein an der Konsole ausgebildeter Anschlag eingreift. Der Anschlag ist zu der Schwenkachse beabstandet angeordnet und begrenzt in dem Langloch den Schwenkwinkel des um die Schwenkachse schwenkenden Schalthebels. Die Konsole weist alternativ ein weiteres Langloch auf, wobei das Langloch sich bogenförmig in Schwenkrichtung des um die Kippachse schwenkbaren Schalthebels erstreckt. In das Langloch greift ein aus dem Gehäuse hervorstehender Anschlag ein. Alternativ dazu ist das Gehäuse mit einem derartigen Langloch versehen, in das ein aus der Konsole hervorstehender Anschlag eingreift. Der Anschlag ist zu der Kippachse beabstandet angeordnet und begrenzt in dem Langloch den Schwenkwinkel des um die Kippachse schwenkenden Schalthebels bzw. der mit dem Schalthebel um die Kippachse schwenkenden Konsole.

Die Konsole ist mittels des Schalthebels um eine quer zur Schwenkachse ausgerichtete Kippachse an einem zum Fahrzeug festen Gehäuse schwenkbar gelagert. Die Kippachse fluchtete mit der Mittelachse von wahlweise einem oder zwei Kippbolzen. Die Kippbolzen lagern die Konsole in der Wählebene, jedoch nicht in der Schaltebene, schwenkbar an dem Gehäuse. Der Schalthebel ist in der Wählebene, zur Konsole unbeweglich, mit der Konsole um die Kippachse schwenkbar. Bei einer Wählbewegung an dem Schaltfinger nimmt der um die Kippachse schwenkende Schalthebel die Konsole mit. Der Schaltfinger ist an einer zum Schaltangriff wegweisenden Seite, vorzugsweise an der entgegengesetzten Seite, der Kippachse am Schalthebel angeordnet und schwenkt mit dem Schalthebel in der Wählebene um die Kippachse.

In der Vorrichtung gemäß Erfindung stehen die Eingriffsnuten in der mittleren neutralen Stellung der Schaltschiene in die Wählrichtungen in einer Linie zueinander ausgerichtet. Der Schaltfinger kann in der Wählebene ungehindert durch die Eingriffsnuten hindurch schwenken, bis die Ruhestellung des Schalthebels erreicht ist und der Schalthebel in eine der Eingriffsnuten eingreift.

Die Lageranordnung sieht weiterhin die schwenkbare Lagerung des Schalthebels in der Schaltebene um eine Schwenkachse in der Konsole vor. Die Schwenkachse verläuft quer zur Kippachse. Die Schwenkachse fluchtet mit den Zentren von sich zwei in der Konsole gegenüberliegenden Lageraugen oder wahlweise mit einem in der Konsole ausgebildeten Lagerauge. Der Schalthebel ist dabei um einen in dem/den Lagerauge(n) gelagerten Schwenkbolzen in der Schaltebene, jedoch nicht in der Wählebene, schwenkbar an der Konsole gelagert. Der Schaltknauf und der Schaltfinger weisen jeweils in eine andere Richtung von der Schwenkachse weg. Bei den Schaltbewegungen ist der Schalthebel über den Schaltfinger mit einer der Eingriffsnuten einer Schaltschiene beweglich gekoppelt. Die Schaltbewegung bewirkt das Verschieben der Schaltschiene. Der Schaltfinger beaufschlagt dabei eine der in Verschieberichtung der Schaltschiene liegenden Flanke der Eingriffsnut. Einer der Schaltschiene zugeordneten Gänge wird durch das Verschieben der Schaltschiene eingelegt.

Die Schwenkachse und die Kippachse liegen erfindungsgemäß horizontal auf unterschiedlichen und vertikal, je nach Ausführung der Lageranordnung, in einer gemeinsamen oder in unterschiedlichen Ebenen. Die Schwenkachse und die Kippachse liegen dabei zwischen dem Kraftangriff am Schaltknauf und dem Schaltfinger. Schwenkbewegungen um die dem Schaltfinger am nächsten liegende der Achsen resultieren am Schaltknauf sowie an jedem der sich in Richtung dieser Achse an dem Schaltknauf anschließenden Punkte des Schalthebels in einem längeren zurückgelegten Weg im Bogenmaß, wenn die Schaltvorrichtung sowohl die Wähl- als auch die Schaltbewegungen auf einen gleichen Schwenkwinkel begrenzt. Es ist somit mit einer Ausgestaltung der Erfindung vorgesehen, dass die dem Schaltfinger am nächsten liegende Achse die Schwenkachse ist. Die Kippachse liegt weiter von dem Schaltfinger entfernt. Der Schaltknauf legt unter der Voraussetzung, dass der Schwenkbereich des Schalthebels in der Schaltvorrichtung auf gleiche Schwenkwinkel beim Wählen und Schalten begrenzt ist, beim Schalten der Gänge vergleichsweise zum Wählen längere Wege zurück. Alternativ ist vorgesehen, dass die Kippachse dem Schaltfinger im Vergleich zur Lage der Schwenkachse am nächsten liegt. Die Schwenkachse liegt weiter von dem Schaltfinger entfernt. Der Schaltfinger legt unter der vorgenannten Voraussetzung beim Wählen der Gassen vergleichsweise zum Schalten längere Wege zurück.

Mit einer Ausgestaltung der Erfindung ist vorgesehen, dass die Kippbolzen drehfest in dem Gehäuse aufgenommen sind. Die Konsole ist um die Kippbolzen schwenkbar. In jedem der Lageraugen der Konsole ist ein Gleitlager zwischen dem Kippbolzen und der Konsole angeordnet. Alternativ dazu sitzt der Kippbolzen ohne gesonderte Lagerung passgenau in dem Lagerauge der Konsole. Der Schalthebel ist entweder schwenkbar um den zur Konsole bewegungsfesten Schwenkbolzen gelagert oder der Schwenkbolzen sitzt fest in dem Schalthebel und bewegt sich in Lageraugen der Konsole. Alternativ sind die Lagerungen des Schalthebels auf dem Schwenkbolzen oder die Lagerungen des Schwenkbolzens in der Konsole mit Gleitlagern versehen.

Mit einer weiteren Ausgestaltung der Erfindung ist eine in der Lageranordnung integrierte Rasteinrichtung vorgesehen. Die Rasteinrichtung verrastet den Schalthebel in der Ruhe- bzw. Neutralstellung sowie wahlweise in einer der geschalteten Stellungen. In der Lageranordnung ist eine Rastkontur mit wenigstens einer ersten Rastvertiefung und einer zweiten Rastvertiefung an dem Schalthebel vorgesehen. Ein Rastelement ist gegen die Rastkontur vorgespannt. Das Rastelement stützt sich an der Konsole ab. Bei Schwenkbewegungen des Schalthebels um die Kippachse greift das Rastelement in die erste der Rastvertiefungen ein. In dieser Position verbleibt das Rastelement, bis der Wählvorgang abgeschlossen ist. Bei Schaltbewegungen des Schalthebels bewegt sich die Rastkontur an dem Rastelement solange entlang, bis das Rastelement in der zweiten Rastausnehmung verrastet ist. In dieser Position ist der eine Gang eingelegt. Die Rasteinrichtung arretiert den Schalthebel dabei in eine dem Gang zugeordneten geschalteten Position.

Die Rastkontur ist an dem Schalthebel bewegungsfest angeordnet und das Rastelement an der Konsole geführt. Alternativ dazu ist das Rastelement an dem Schalthebel geführt und stützt sich an diesem ab. In diesem Fall ist die Rastkontur an der Konsole ausgebildet. Es ist weiterhin vorgesehen, dass das Rastelement eine Rolle an einem Kipphebel ist. Der Kipphebel ist an einem zu der Konsole festen Kipppunkt schwenkbar an der Konsole befestigt. Eine sich an der Konsole abstützende sowie von dem Kipppunkt entfernt an dem Kipphebel angreifende Feder spannt die Rolle gegen die Rastkontur vor. Die Kippachse des Kipphebels an dem Kipppunkt und die Rotationsachse der Rolle verlaufen parallel zur Schwenkachse des Schalthebels. Bei Bewegungen der Rastkontur gegen die Rolle rollt die Rolle auf der Rastkontur von einer Rastvertiefung in die andere Rastvertiefung ab.

Eine Ausgestaltung der Rasteinrichtung sieht vor, dass der Kipphebel an einem aus der Konsole hervorstehenden Vorsprung kippbar befestigt ist. Der Vorsprung ist von der Rolle wegweisend an der Konsole befestigt oder ausgebildet. Der Kipphebel ist aus Blech gebildet und mittels eines Bolzens an dem Vorsprung um den Kipppunkt schwenkbar gelagert. An einem Ende des Kipphebels, das nicht die Rolle trägt, weist der Kipphebel ein hakenförmiges Ende auf. Das hakenförmige Ende hintergreift den Vorsprung an einer von dem Kipphebel abgewandten Seite zumindest teilweise. Mit dem hakenförmigen Ende ist der Kipphebel auf dem Bolzen axial, d. h. im Richtungssinn der Schwenkachse des Schalthebels, gesichert. Außerdem sieht eine Ausgestaltung der Rasteinrichtung vor, dass der Kipphebel aus Blech gebildet ist und dass die Rolle mittels eines Bolzens an dem Kipphebel um die Rotationsachse beweglich gelagert ist. Der Kipphebel weist auf Höhe der Rolle ein weiteres hakenförmiges Ende auf. Mit dem hakenförmigen Ende hintergreift der Kipphebel die Rolle an einer von dem Kipphebel abgewandten Seite zumindest teilweise. Die Rolle ist dabei axial, d. h. im Richtungssinn der Schwenkachse des Schalthebels, auf dem Bolzen gesichert. Die Rolle ist mittels einer den Kipphebel in Richtung der Schwenkachse ziehenden Zugfeder gegen die Rastkontur vorgespannt. Alternativ dazu ist vorgesehen, dass der Kipphebel mit einer sich an der Konsole abstützenden Druckfeder belastet ist. Die Zugfeder ist in einer Hülse zu der Konsole geführt und mit einem ihrer Federenden an der Konsole eingehängt. Das andere Ende greift an dem Kipphebel an. Die Rastkontur ist bevorzugt an einem von dem Schalthebel abstehenden Blech ausgebildet. In das Blech ist die Rastkontur mit den Rastvertiefungen eingeformt. Das Blech ist auf geeignete Weise, z. B. durch Schweißen oder durch eine durch über den Schalthebel gezogene Hülse, an dem Schalthebel befestigt. Das Blech durchgreift eine Öffnung in einer Wand der Konsole. Die Rastkontur ist dabei an dem Ende des Bleches ausgebildet und liegt außerhalb der Wand der Konsole. Die Rolle ist außenseitig der Konsole angeordnet und mit den quer zur Schwenkachse des Schalthebels hintereinander ausgerichteten und sich aneinander anschließenden Rastvertiefungen versehen.

Es ist weiterhin vorgesehen, dass die Lageranordnung eine Vorrichtung zum Erhöhen von Wählkräften aufweist. Die Vorrichtung ist zumindest aus einer zur Konsole festen Rampe und aus mindestens einer Ablaufrolle gebildet. Die Ablaufrolle ist mittels einer Feder gegen die Rampe vorgespannt. Die Rampe ist vorzugsweise aus einem gestanzten und ggf. spanlos bzw. spanend nachgearbeiteten Blech gebildet. Das Blech ist mit der Konsole verschweißt. Alternativ dazu ist vorgesehen die Rampe an einer aus Blech gebildeten Konsole direkt ausgeformt. Bei Schwenkbewegungen des Schalthebels um die Kippachse schwenkt die Rampe mit der Konsole gegen die an dem Gehäuse abgestützte Ablaufrolle. Die Ablaufrolle rollt dabei auf der Rampe ab. Über die Kraft der Feder und die Kontur der Rampe sind die Kräfte beim Wählen einer Gasse der Vorwärtsgänge und auch beim Anwählen des Rückwärtsganges steuerbar. Die Rampe steigt über wenigstens einer quer von einer gedachten Ebene abgehenden gedachten Abszisse an. Die Ebene verläuft dabei mit der Kippachse und ist so ausgerichtet, dass sie rechtwinklig von der Schwenkachse durchdrungen ist. Die Rampe steigt über der Abszisse von der Ebene weg an. Die Ablaufrolle ist drehbar um eine zum Gehäuse ortsfeste Rotationsachse gelagert. Der um die Kippachse geschwenkte Schalthebel nimmt die Konsole mit der Rampe mit. Die Rampe bewegt sich gegen die Ablaufrolle. Die Ablaufrolle steigt dabei gegen die Kraft der Feder an der Rampe auf. Die Wählkraft wird erhöht.

Für die Ausrichtung der rechtwinklig zu der Abszisse stehenden und den Anstieg beschreibenden Ordinate sind alternative Ausgestaltungen vorgesehen. Eine Ausgestaltung sieht vor, dass die Ordinate parallel zu der Kippachse mit der Ebene verläuft. Die Rampe weist von der Konsole weg. Ihre mit der Ablaufrolle in Berührung kommende Kontur entfernt sich mit zunehmendem Anstieg von der Konsole. Die Ablaufrolle wird dabei in Richtung der Konsole gegen die Rampe vorgespannt.

Die Ablaufrolle ist bevorzugt drehbar an einem Hebel befestigt. Der Hebel ist um einen zu dem Gehäuse festen Drehpunkt schwenkbar angeordnet. Eine oder mehrere Federn greifen von dem Drehpunkt des Hebels entfernt an dem Hebel an. Der Hebel ist mittels der Feder über die Ablaufrolle gegen die Rampe vorgespannt. Die durch den Drehpunkt des Hebels verlaufende Drehachse, um die der Hebel schwenkt, und die Rotationsachse der Rolle sind quer zur Kippachse des Schalthebels ausgerichtet und verlaufen vorzugsweise parallel zu der Wandung der Konsole. Eine gleichmäßige Kraftverteilung wird mit zwei Rampen an der Konsole erzielt. Auf jede der Rampen wirkt jeweils einer der vorher beschriebenen Hebel mit jeweils einer der Ablaufrollen. Die Hebel sind sich einander gegenüberliegend beidseitig der Konsole angeordnet. Die Hebel nehmen die Konsole mit den Rampen zwischen sich und sind gegeneinander mittels wenigstens einer Zugfeder verspannt. Die Zugfeder ist jeweils an einem dem Drehpunkt abgewandten freien Ende eines jeden der Hebel eingehängt. Eine gleichmäßige Kraftverteilung und ein Bewegungsausgleich zwischen den Hebeln ist abgesichert. Die Lagerung der Konsole in dem Gehäuse, im Gegensatz zu der einseitig mit einer Vorrichtung zum Erhöhen der Wählkraft, ist von unerwünschten Querkräften aus einseitiger Belastung frei.

Alternativ zu der vorgenannten Ausrichtung der Ordinate sieht eine Ausgestaltung der Vorrichtung vor, dass die den Verlauf der Kontur beschreibende Ordinate senkrecht zu der Kippachse ausgerichtet ist und gleichzeitig mit der Ebene verläuft. Die Ordinate verläuft vorzugsweise parallel zu einer der Wandungen der Konsole und schneidet die Kippachse. Die Rampe ist deshalb durch die Ablaufrolle entweder in Richtung der Kippachse des Schalthebels oder aus der Richtung der Kippachse des Schalthebels mittels der Ablaufrolle belastet. Die Ablaufrolle wiederum ist drehbar an einem Hebel befestigt. Der Hebel ist um einen zu dem gehäusefesten Drehpunkt schwenkbar. Wenigstens eine aber auch mehrere von dem Drehpunkt entfernt an dem Hebel angreifende Federn spannen den Hebel über die Ablaufrolle gegen die Rampe von der Kippachse wegweisend oder zu der Kippachse hinweisend vor. Die durch den Drehpunkt verlaufende Drehachse des Hebels und die Rotationsachse der Rolle sind parallel zu der Kippachse des Schalthebels ausgerichtet. Für diese Ausführungsvariante ist wiederum vorgesehen, dass an der Konsole zwei Rampen angeordnet sind. Die Rampen sind an zwei voneinander weg und nach außen weisenden Wandabschnitten der Konsole befestigt bzw. ausgebildet. Auf jede der Rampen wirkt jeweils einer der Hebel mit jeweils einer der Ablaufrollen. Jeder der Hebel ist mittels jeweils mindestens einer sich zu dem Gehäuse abstützenden Feder über eine der Ablaufrollen gegen die Rampe vorgespannt.

Für eine Lageranordnung eines Schalthebels an einem mehrgängigen Wechselgetriebe ist mit einer weiteren Ausgestaltung der Erfindung vorgesehen, dass die Rampe ausgehend von dem in der Ebene liegenden Koordinatenursprung des durch die Abszisse sowie Ordinate gebildete Koordinatensystems über einer ersten Abszisse sowie über eine entgegengesetzt zu der ersten Abszisse gerichteten zweiten Abszisse beidseitig von der Ebene weg ansteigt. Der in der Neutralstellung stehende Schalthebel steht senkrecht in der Konsole. Dabei verläuft die Mittenachse des Schalthebels mit der von der Kippachse ausgehenden Ebene. Die Rampe steigt beidseitig der Ebene von dem Koordinatenursprung ausgehend sowie von der Ebene weg an. Die in der Neutralstellung auf Höhe des Koordinatenursprungs an der Rampe anliegende Ablaufrolle ist mittels der absteigenden Flanken gegenüber dem Koordinatenursprung zentriert. Die auf den Hebel wirkende Federkraft zwingt die Ablaufrolle in diese Vertiefung an der Rampe und hält damit die Konsole in der Neutralstellung des Schalthebels mittels der Kraft der Feder arretiert. Der Verlauf der Rampe kann von einer Seite der Ebene zu der anderen Seite der Ebene spiegelbildlich gestaltet sein oder von einer Seite der Ebene zu der anderen Seite der Ebene unterschiedliche Anstiege aufweisen. Wählkräfte sind zusätzlich über die Anzahl, Federkennlinie und die Hebelverhältnisse an den Hebeln fein abstimmbar.

Einen wesentlichen Einfluss auf die Wählkraft an dem um die Kippachse schwenkenden Schalthebel hat der Anstieg der Rampe. Für das Anwählen der Gassen der Vorwärtsgänge in einem mehrgängigen Getriebe ist zunächst ein flacher Anstieg der Rampe zu beiden Seiten der Ebene vorgesehen. Auf diesem Teil der Rampe rollt die Ablaufrolle ab, wenn der Schalthebel die Kippachse wahlweise in die eine oder andere Schwenkrichtung zum Anwählen einer der Gassen der Vorwärtsgänge geschwenkt wird. Die Gegenkraft an dem Schalthebel nimmt mit zunehmenden Schwenkwinkel des Schalthebels nur geringfügig zu. Zur Wahl der Gasse des Rückwärtsganges wird der Schalthebel in eine Schwenkrichtung über seine Position zu einer Gasse mit Vorwärtsgängen hinaus in die Gasse des Rückwärtsganges geschwenkt. Die Konsole schwenkt mit dem Schalthebel dabei weiter mit und somit auch die Rampe. Der flach ansteigenden Rampe schließt sich ein Abschnitt an der Rampe an, der stark abgeknickt von der Abszisse weg ansteigt. Wenn der Schalthebel seine Position vor der Gasse des Rückwärtsganges erreicht, trifft die Rolle auf den Abschnitt an der Rampe mit dem steilen Anstieg. Der Hebel wird mittels der auf der steil ansteigenden Rampe aufsteigenden Ablaufrolle gegen die Kraft der Feder bewegt. Die Gegenkraft an der Konsole und somit an dem Schalthebel steigt sprungartig an. Dem Bediener wird mittels dieses Kraftanstieges an dem Schaltknauf signalisiert, dass er im Begriff ist in die Gasse des Rückwärtsganges einzuwählen.

Mit einer weiteren Ausgestaltung der Erfindung ist eine Sperreinrichtung an der Lageranordnung des Schalthebels vorgesehen. Mindestens zwei jedoch zumeist drei oder vier Schaltschienen liegen nebeneinander im Schwenkbereich des Schaltfingers. In den in der Wählebene liegenden Ruhestellung sowie der Neutralstellung des Schalthebels stehen die Schaltschienen in einer mittleren neutralen Stellung. Die mittels der Schaltschiene, durch Längsverschieben der Schaltschienen, schaltbaren Gänge sind nicht geschaltet. Jede der Schaltschienen weist eine Eingriffsnut bzw. ein Schaltmaul für den Eingriff des Schaltfingers auf. Durch Wählbewegungen des Schalthebels in eine der Gassen, greift der Schaltfinger in eine der Schaltschienen ein. Eine gelenkige Verbindung zwischen der Schaltschiene und dem Schalthebel ist vorgenommen.

In der sich der Wählbewegung anschließenden Schaltbewegung, bei der der Schalthebel um die Schwenkachse schwenkt, wird die mit dem Schalthebel in Verbindung stehende Schaltschiene längs verschoben und einer der Gänge eingelegt. Während der Schaltbewegung des Schalthebels sind die anderen nicht mit dem Schalthebel im Eingriff stehenden Schaltschienen gegen Längsbewegungen zu sperren. Die Schaltschienen sind mittels der Lageranordnung nach dem Abschluss des Wählvorganges gesperrt. Dazu ist an der Konsole mindestens ein Sperrfinger ausgebildet. Dieser Sperrfinger greift dabei in einen an der Schaltschiene ausgebildeten Schlitz ein und setzt die Schaltschiene längs fest. Jede der Schaltschienen weist einen der Schlitze auf. Der Schlitz ist in Richtung des Sperrfingers sowie in Richtung des um die Kippachse schwenkenden Schalthebels offen. In der mittleren neutralen Stellung der Schaltschienen sind die Schaltschienen bzw. die Schlitze der Schaltschienen so zueinander ausgerichtet, dass die Schlitze in der Schwenkrichtung des Sperrfingers hintereinander liegen und zueinander ausgerichtet sind.

Der Sperrfinger schwenkt bei Wählbewegungen am Schalthebel mit der um die Kippachse schwenkenden Konsole und kann sich in seiner Schwenkrichtung durch die einander benachbart liegenden Schlitze frei hindurchbewegen, bis der Schaltfinger in eine der gewählten längsbeweglichen Schaltschienen sowie der Sperrfinger in den Schlitz oder die Schlitze einer festzusetzenden Schaltschiene formschlüssig eingreift. Die durch den Schaltfinger beaufschlagte Schaltschiene ist dabei von dem Sperrfinger nicht gesperrt und ist in Längsrichtung mittels des Schaltfingers frei beweglich. Bei Schwenkbewegungen des Schalthebels um die Schwenkachse zum Schalten von Gängen verbleibt der Sperrfinger in den Schlitzen der gesperrten Schaltschienen und hält diese während der Schaltvorgänge und während des Fahrbetriebes mit eingelegtem Gang in ihrer gesperrten Position.

Eine Ausgestaltung der Erfindung sieht vor, dass dem Schaltfinger zumindest drei der Schaltschienen zugeordnet sind. Der Sperrfinger greift in zwei der Schaltschienen gleichzeitig ein. Der Schaltfinger ist mit der zu schaltenden Schaltschiene formschlüssig verbunden. Steht der Schaltfinger nach dem Abschluss des Wählvorganges in einer Gasse, die einer zwischen zwei zu sperrenden Schaltschienen angeordneten Schaltschiene zugeordnet ist, sperrt der Sperrfinger die benachbarten Schaltschienen gleichzeitig. Eine Freimachung an dem Sperrfinger sichert ab, dass die gewählte Schaltschiene von dem Sperrfinger unberührt längs freibeweglich mittels des Schaltfingers schwenkbar ist. Die Freimachung steht über dem Schlitz der längs freibeweglichen Schaltschiene. Der Sperrfinger greift an dieser Schaltschiene somit nicht in den Schlitz ein. Die mit dem Schaltfinger bewegliche Schaltschiene durchdringt die Freimachung an dem Sperrfinger zu dem Sperrfinger somit berührungslos. Der Sperrfinger ist in seiner einfachsten Form ein flaches Blechteil. Das Blechteil steht entweder in einer gedachten von der Kippachse des Schalthebels senkrecht durchdrungenen Ebene einteilig mit der Wandung aus der Wandung der Konsole hervor oder ist an dieser gesondert befestigt. Der Sperrfinger ist in dieser Ebene dabei so breit, dass in jeder geschwenkten Position des Sperrfingers jede der zu sperrenden Schaltschienen mittels des Sperrfingers beaufschlagbar ist.

Die Lageranordnung für den Schalthebel gemäß Erfindung weist mit der Vorrichtung zum Erhöhen der Wählkraft, der Rastiereinrichtung und der Sperreinrichtung Elemente auf, die üblicherweise von einer Lageranordnung des Schalthebels getrennt in dem Getriebe angeordnet sind. Es ist mit der Erfindung eine raumsparende sowie einfach herzustellende Schalteinrichtung geschaffen. Die Lageranordnung des Schalthebels ist als Modul vormontierbar, wobei die Konsole des Schalthebels vorwiegend die Basis für die Befestigung weiterer Elemente des Schaltgetriebes ist.

### Kurze Beschreibung der Zeichnungen

Die Erfindung wird nachfolgend anhand von Ausführungsbeispielen näher erläutert. Es zeigen:
Figuren 1 bis 9 ein Ausführungsbeispiel einer Lageranordnung gemäß Erfindung in verschiedenen Ansichten und Schnittdarstellungen. Im Einzelnen zeigt:
   - Figur 1: eine Gesamtansicht der Lageranordnung,
   - Figur 2: einen Längsschnitt durch die Lageranordnung,
   - Figur 2a: das Schaltschema der Stellungen des Schalthebels,
   - Figur 3: einen Querschnitt der Lageranordnung,
   - Figur 4: eine schematische Darstellung der Lage der Kippachse und der Schwenkachse zu dem Schalthebel,
   - Figur 5: einen Längsschnitt durch die Lageranordnung mit dem um die Kippachse in eine Wählrichtung geschwenkten Schalthebel,
   - Figur 6: einen Querschnitt durch die Vorrichtung mit dem um die Schwenkachse in eine Schaltstellung geschwenkten Schalthebel,
   - Figur 7: eine Gesamtansicht der Lageranordnung ohne das Gehäuse,
   - Figur 8a: eine Ansicht der Lageranordnung von unten in der Neutralstellung des Schalthebels,
   - Figur 8b: eine Ansicht der Lageranordnung von unten mit dem in die Gasse des Rückwärtsganges geschwenkten Schalthebel und
   - Figur 9: eine Seitenansicht der Lageranordnung mit dem Sperrfinger und
   - Figur 10: ein weiteres Ausführungsbeispiel einer erfindungsgemäßen Lageranordnung ohne Gehäuse.

### Detaillierte Beschreibung der Zeichnungen

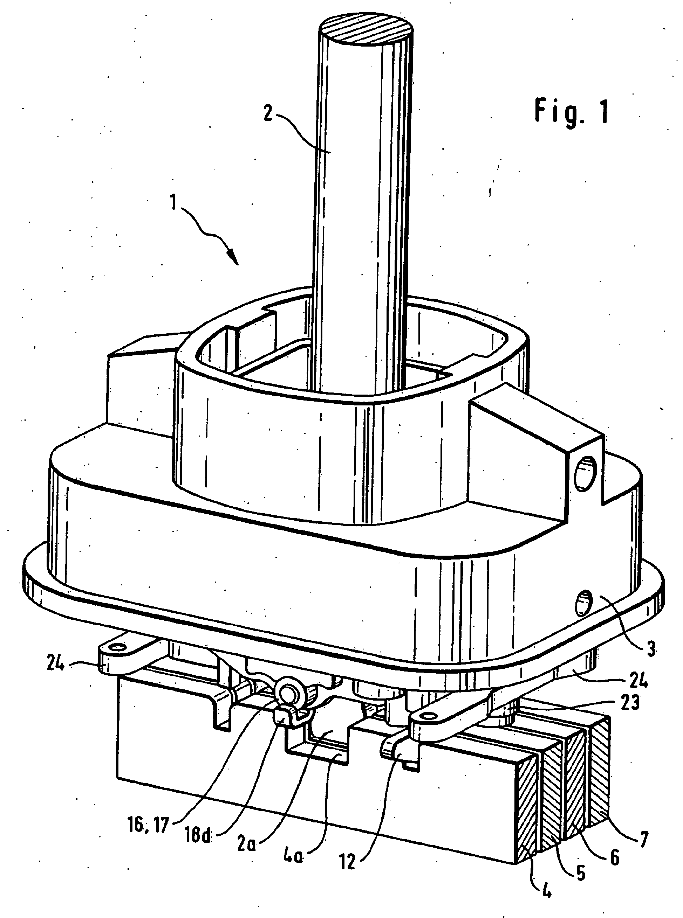

Figur 1 zeigt eine Gesamtansicht eines Ausführungsbeispieles einer Lageranordnung 1. In der Lageranordnung 1 ist ein Schalthebel 2 gelagert. Die Lageranordnung 1 ist in einem Gehäuse 3 aufgenommen. Der Schalthebel 2 wirkt mit einem Schaltfinger 2a wahlweise auf Schaltschienen 4, 5, 6 und 7. Die Schaltschienen 4, 5, 6 und 7 sind jeweils mit einer Eingriffsnut 4a, 5a, 6a, 7a versehen, in die der Schalthebel 2 in Abhängigkeit von seiner Wählposition eingreift.

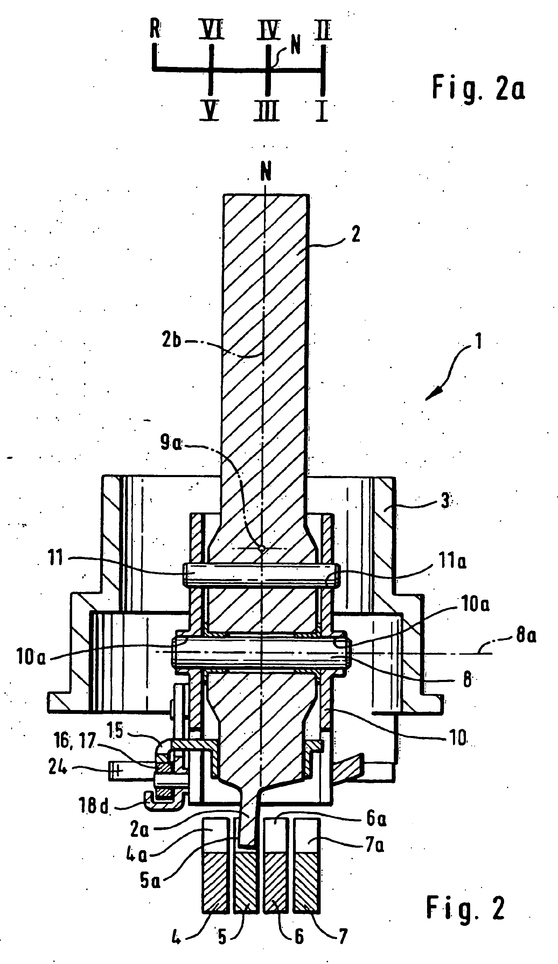

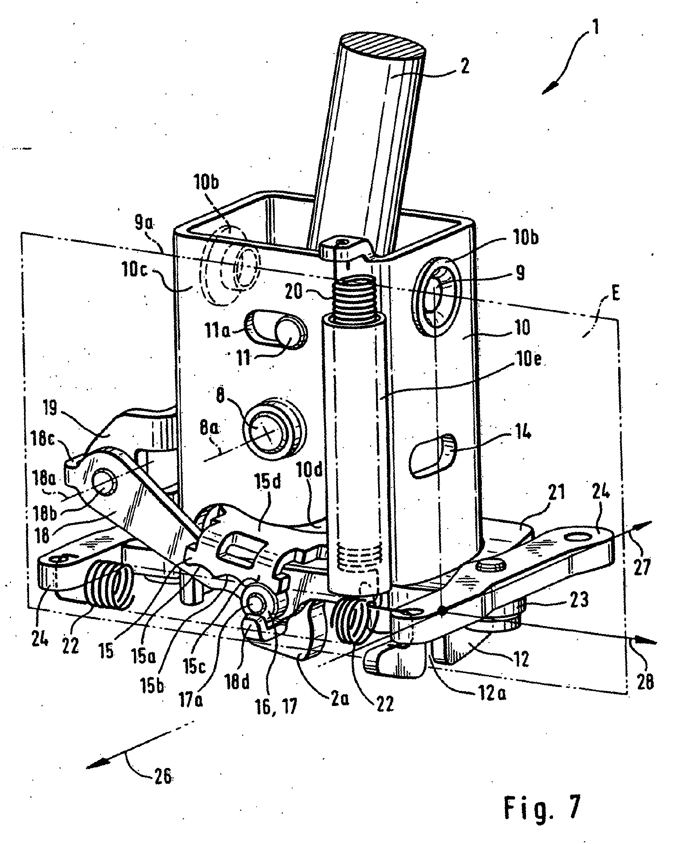

In Figur 2 ist die Lageranordnung 1 geschnitten dargestellt. Der Schalthebel 2 steht in der Neutralstellung N. Der Schaltfinger 2a verläuft leicht zu der in der Neutralstellung stehenden Mittelachse 2b des *Schalthebels* 2 abgewinkelt und greift in die Eingriffsnut 5a der Schaltschiene 5 ein. Die Schaltschienen 4, 5, 6 und 7 stehen in einer neutralen Mittelstellung. In dieser neutralen Mittelstellung sind die Eingriffsnuten 4a, 5a, 6a und 7a in Schwenkrichtung des Schalthebels 2 hintereinander sowie zueinander ausgerichtet. Der Schalthebel 2 ist aus der neutralen Stellung N um die senkrecht zu der Darstellung verlaufende Kippachse 9a schwenkbar in der Lageranordnung 1 angeordnet. Der Schaltfinger 2a ist beim Schwenken des Schalthebels 2 um die Kippachse *9a* innerhalb der Eingriffsnuten 4a, 5, 6a und 7a frei beweglich schwenkbar. Der Schalthebel 2 ist in einer Konsole 10 auf einem Schwenkbolzen 8 um die Schwenkachse 8a schwenkbar gelagert. Der Schwenkbolzen 8 sitzt fest in Lageraugen 10a der Konsole 10. In dem Schalthebel 2 ist weiterhin ein Anschlag 11 in Form eines Stiftes befestigt. Mit dem Anschlag 11 wird der Schwenkwinkel des Schalthebels 2 um die Schwenkachse 8a in einem sich in Schwenkrichtung erstreckendem Langloch 11 a begrenzt (siehe auch Figur 7).

Aus der neutralen Stellung N ist der Schalthebel 2 um die Schwenkachse 8a mit dem Schaltfinger 2a schwenkbar. Der Schaltfinger 2a beaufschlagt dabei eine in Schwenkrichtung liegende Flanke der Eingriffsnut 5a. Die Schaltschiene 5 ist einer Gasse zugeordnet, aus der der dritte und vierte Gang durch Schwenken des Schalthebels 2 schaltbar sind. Figur 2a zeigt das Schaltschema zu den Wähl- oder Schaltstellungen des Schaltknaufes 2c. Aus der Gasse III-IV ist der Schalthebel 2 um die Kippachse 9a in Richtung der Gasse I-II schwenkbar. In der Gasse I-II greift der Schaltfinger 2a in die Schaltschiene 4 ein. Mit der Schaltschiene 4 ist der erste oder zweite Gang mittels des um die Schwenkachse 8a schwenkenden Schalthebels 2 schaltbar. Der um die Kippachse 9a in die Gasse VI-V geschwenkte Schaltfinger 2a greift in die Schaltschiene 6 ein. Mit einem Schwenken des Schalthebels 2 um die Schwenkachse 8a ist wahlweise der vierte oder fünfte Gang schaltbar. Bei einer Schwenkbewegung des Schalthebels um die Kippachse 9a über die Gasse VI-V hinaus wird die Gasse des Rückwärtsganges R angewählt. Der Schaltfinger 2a greift dabei in die Eingriffsnut 7a der Schaltschiene 7 ein. Durch Schwenken des Schalthebels 2 um die Schwenkachse 8a ist der Rückwärtsgang aus dieser Position schaltbar.

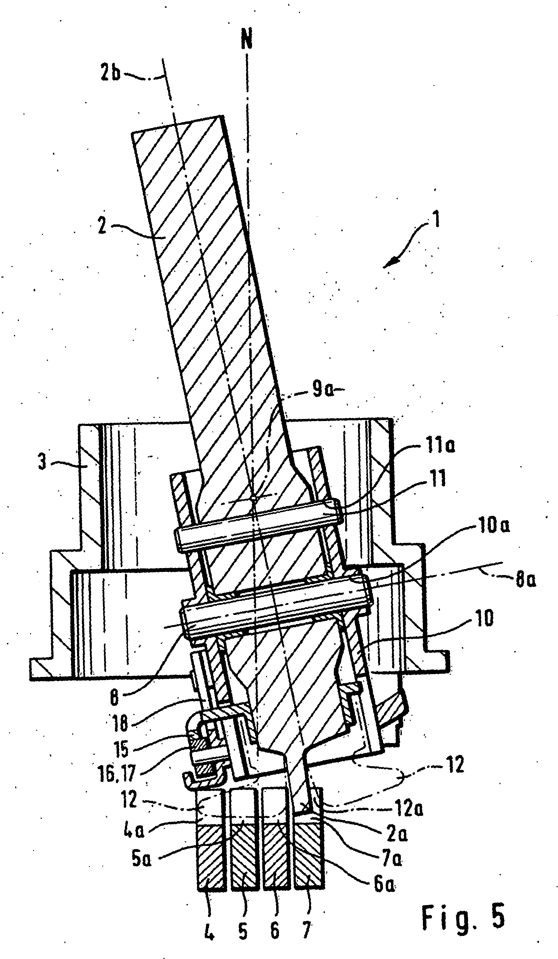

In Figur 5 zeigt den gleichen Schnitt wie in Figur 2. Der Schalthebel 2 ist jedoch durch Schwenken um die Kippachse 9a in die Gasse des Rückwärtsganges R bewegt. Der Schaltfinger 2a greift dazu in die Eingriffsnut 7a der Schaltschiene 7 ein. Aus dieser Position ist der Schalthebel 2 um die Schwenkachse 8a schwenkbar. Der mit dem Schalthebel 2 schwenkende Schaltfinger 2a nimmt dabei die Schaltschiene 7 in ihrer Längsrichtung mit, bis der Rückwärtsgang R eingelegt ist.

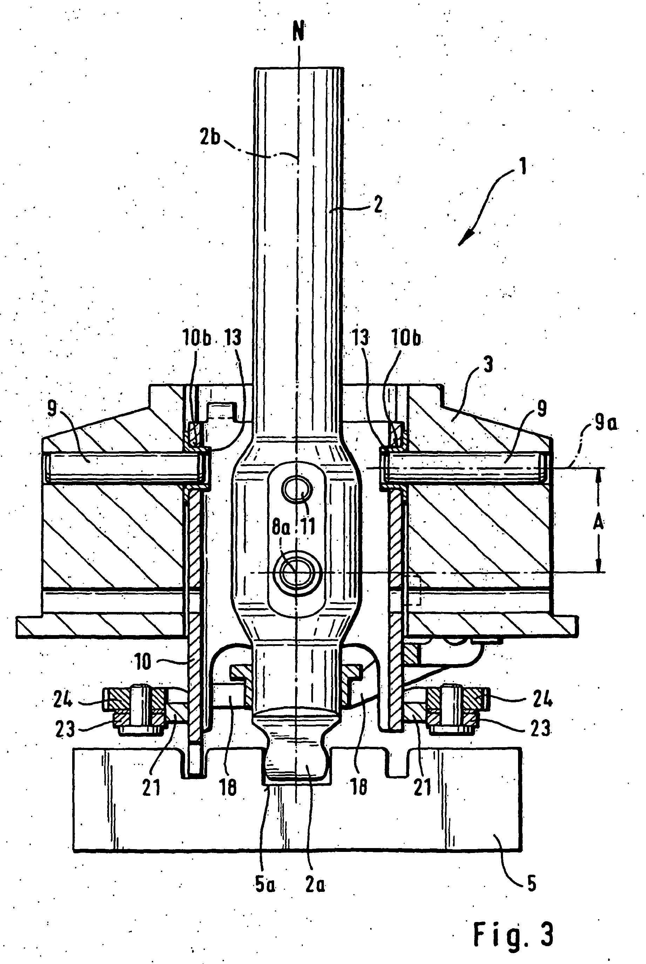

Figur 3 zeigt einen Querschnitt der Lageranordnung 1. Der Schalthebel 2 steht in der Neutralstellung und greift mit seinem Schaltfinger 2a in die Schaltschiene 5 ein. In dieser Ansicht ist die Schaltschiene 4 durch die Schaltschiene 5 verdeckt. Der Schaltfinger ist über den Eingriff in die Eingriffsnut 5a formschlüssig mit der Schaltschiene 5 gekoppelt. Aus der Neutralstellung ist der Schalthebel 2 um die Kippachse 9a und die Schwenkachse 8a schwenkbar. Die Kippachse 9a ist die Mittellinie von zwei Kippbolzen 9. Die Kippbolzen 9 sind in dem Gehäuse 3 fest angeordnet und greifen jeweils in ein Lagerauge 10b der Konsole 10. Die Konsole 10 ist durch den Schalthebel 2 mittels Gleitlagern 13 in dem Lagerauge 10b auf dem Kippbolzen 9 gelagert. Die Schwenkachse 8a und die Kippachse 9a verlaufen mit dem Abstand A zueinander beabstandet sowie quer zueinander. Dabei liegt die Schwenkachse 8a dem Schaltfinger 2a am nächsten.

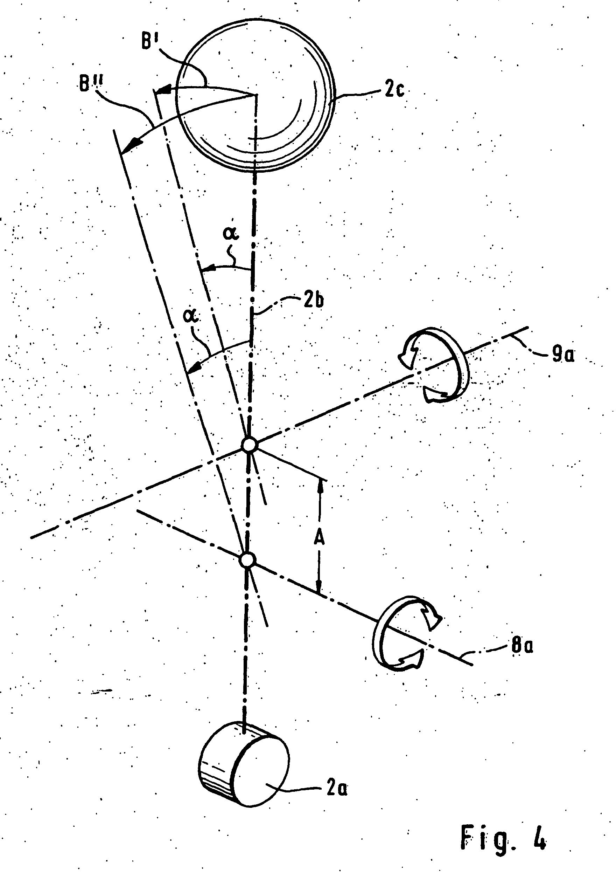

Figur 4, eine schematischen Darstellung des Schalthebels 2 mit den Achsen 8a, 9a zeigt, dass mittels der zueinander um den Abstand A beabstandeten Achsen 8a, 9a unterschiedliche Wähl- und Schaltwege am Schaltknauf 2c des Schalthebels erzielt werden. Der Schaltknauf 2c legt bei einem um die Kippachse 9a mit dem Schwenkwinkel α geschwenkten Schalthebel 2 den Weg B' im Bogenmaß zurück. Wenn der Schalthebel 2 um die Schwenkachse 8a mit dem gleichen Winkel α geschwenkt wird, legt der Schaltknauf 2c den Weg B" im Bogenmaß zurück. B" ist aufgrund des Abstandes A zwischen der Achse 8a und der Achse 9a größer als B'.

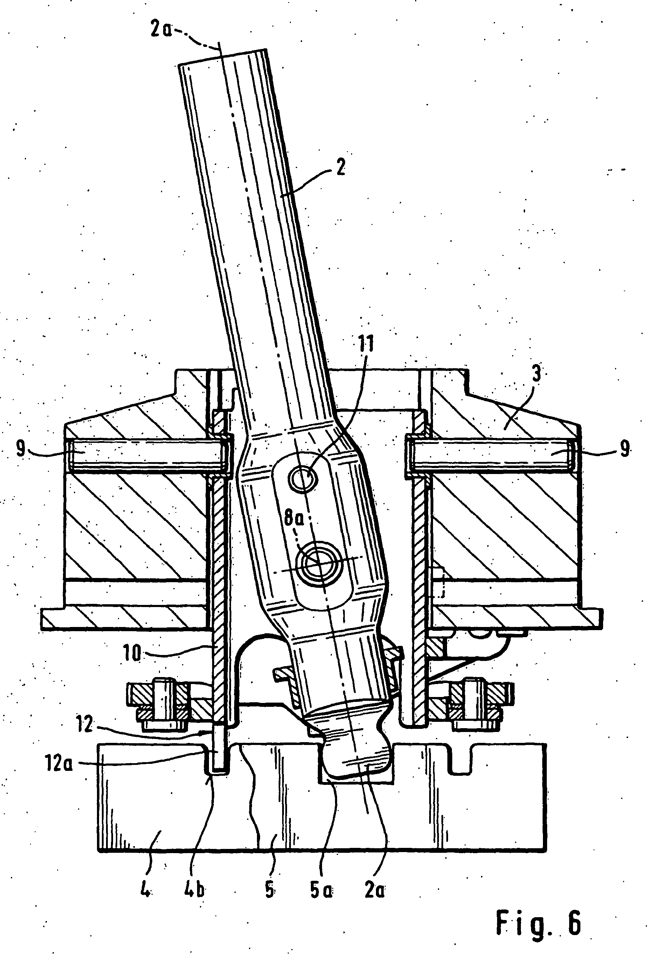

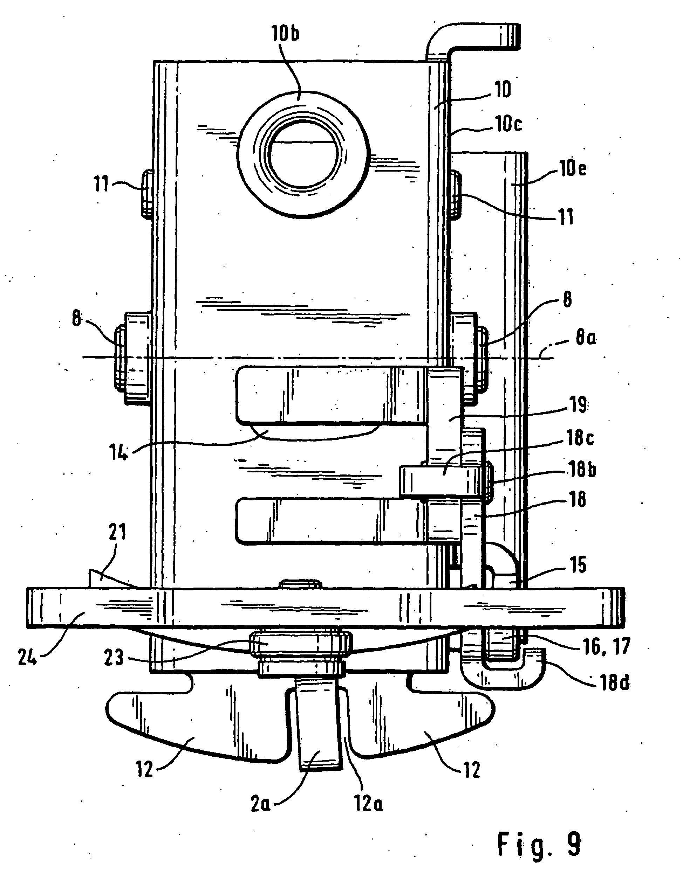

Figur 6 zeigt die Lageranordnung 1 in der gleichen Schnittdarstellung wie in Figur 3. Der Schalthebel 2a ist um die Schwenkachse 8a in eine Schaltstellung geschwenkt und hat dabei mittels des Schaltfingers 2a die Schaltschiene 5 in ihre Längsrichtung verschoben. Die Schaltschiene 4 verbleibt dabei unverändert in ihrer Position. In dieser Position ist die Schaltschiene 4 mittels eines Sperrfingers 12 an der Konsole 10 festgesetzt. Der Sperrfinger 12 greift dazu in einen Schlitz 4b an der Schaltschiene 4. In Figur 5 ist der Sperrfinger 12 in einer Vorderansicht zumindest teilweise dargestellt. Der Sperrfinger 12 ist mittels einer Freimachung 12a geteilt. Durch die Freimachung 12a ist die Schaltschiene 5 in der nach Figur 6 dargestellten Anordnung berührungslos zu dem *Sperrfinger* 12 hindurch verschiebbar. Wie aus der Ansicht in Figur 5 ersichtlich ist, schwenkt der Sperrfinger 12 mit dem Schaltfinger *2a* um die Kippachse 9a, wenn mit dem Schalthebel 2 eine der Gassen gewählt wird. In Figur 5 gibt der Sperrfinger 12 mittels der Freimachung 12a die Schaltschiene 7 für das Schalten des Rückwärtsganges und in Figur 6 die Schaltschiene 5 für das Schalten eines der Schaltschiene 5 zugeordneten Gänge frei. Figur 9 zeigt die Konsole 10 mit dem Sperrfinger 12 ohne die Schaltschienen. *Der* Schaltfinger 2a ist in Richtung der Freimachung 12a um die Schwenkachse 8a schwenkbar, so dass jede der mit dem Schaltfinger 2a im Eingriff stehende Schaltschiene zu dem Sperrfinger 12 berührungslos durch die Freimachung 12a verschiebbar ist.

Figur 7 zeigt die Lageranordnung 1 ohne das Gehäuse 3. Die Konsole 10 ist aus einem Profil gefertigt bzw. aus einem Blech zu einem Profil gebogen. In die Konsole sind Langlöcher 11a und 14 eingebracht. In das Langloch 11a greift, wie anfangs schon beschrieben, der Anschlag 11 ein. Der Anschlag 11 geht von dem Schalthebel 2 aus. Mittels des Anschlages 11 in dem Langloch 11 a ist der Schwenkwinkel des Schalthebels 2 um den Schenkbolzen 8 in der Konsole 10 begrenzt. Der Anschlag 11 liegt an jeweils einem Ende des Langloches 11a an, wenn ein Gang geschaltet ist. In das Langloch 14 greift ein von dem Gehäuse 3 ausgehender und nicht dargestellter Anschlag ein. Mittels des Anschlages in dem Langloch 14 ist die Schwenkbewegung der Konsole 10 zu dem Gehäuse um den Kippbolzen 9 begrenzt.

Die Lageranordnung 1 weist eine Rastkontur 15 mit Rastvertiefungen 15a, 15b und 15c auf. Die Rastkontur 15 ist aus Blech ausgeformt. Das Blech ist winkelförmig abgebogen und mittels einer von der Rastkontur 15 abgehenden Verlängerung 15d an dem Schalthebel 2 befestigt. Die Verlängerung 15d durchgreift dabei eine von der Schwenkachse 8a des Schalthebels 2 durchdrungene Wand 10c der Konsole 10 an einer Öffnung 10d der Wand. Gegen die Rastkontur 15 ist ein Rastelement 16 vorgespannt. Das Rastelement 16 ist eine Rolle 17. Die Rolle 17 sitzt drehbar auf einem Bolzen 17a. Der Bolzen 17a ist an einem Kipphebel 18 befestigt. Der Kipphebel 18 ist um den Kipppunkt 18a auf einem Bolzen 18b schwenkbar befestigt. Der Bolzen 18b ist an einem mit der Kippachse 9a gleichgerichteten und von der Rotationsachse der Rolle 17 wegweisenden Vorsprung 19 befestigt. Der Kipphebel 18 ist aus Blech gebildet und weist ein hakenförmiges Ende 18c auf. Das hakenförmige Ende 18c hintergreift den Vorsprung 19 an einer von dem Kipphebel 18 abgewandten Seite. Damit ist der Kipphebel 18 auf dem Bolzen 18b axial an dem Vorsprung 19 gesichert. Die um ihre Rotationsachse an dem Kipphebel 18 beweglich gelagerte Rolle 17 ist mittels eines weiteren hakenförmigen Endes 18d an dem Kipphebel 18 gesichert. Dabei hintergreift das hakenförmige Ende 18d die Rolle 17 an einer von dem Kipphebel 18 abgewandten Seite.

Der Kipphebel 18 ist an einem dem Kipppunkt 18a abgewandten Ende mit einer Feder 20 belastet. Die Feder 20 ist eine Zugfeder und ist mir ihrem einen Ende an dem Kipphebel 18 sowie mit dem anderen Ende an der Konsole 10 eingehängt. Die Feder 20 zieht den Kipphebel 18 mit der Rolle 17 gegen die Rastkontur 15 und ist dabei in einer Hülse 10e an der Konsole 10 geführt. Der Schalthebel 2 steht in Figur 7, um die Schwenkachse 8a geschwenkt, in einer geschalteten Stellung. Der Anschlag 11 liegt an einem Ende des Langloches 11a an. In dieser Stellung ist die Rolle 17 in der Rastvertiefung 15c eingerastet und arretiert den Schalthebel 2 in seiner Stellung. Wird der Schalthebel 2 gegensinnig zu seiner jetzigen Schwenkstellung um die Schwenkachse 8a geschwenkt, steigt die Rolle 17 aus der Rastvertiefung 15c auf und verrastet zunächst in der Rastvertiefung 15b. In dieser Stellung steht der Schalthebel 2 entweder in der Neutralstellung oder in einer der Ruhestellungen der Gassen vor dem Schalten eines Ganges. Wird der Rasthebel 2 in diese Richtung weiter geschwenkt, verrastet die Rolle 17 schließlich in der Rastvertiefung 15a und arretiert den Schalthebel 2 in einer weiteren Schaltstellung.

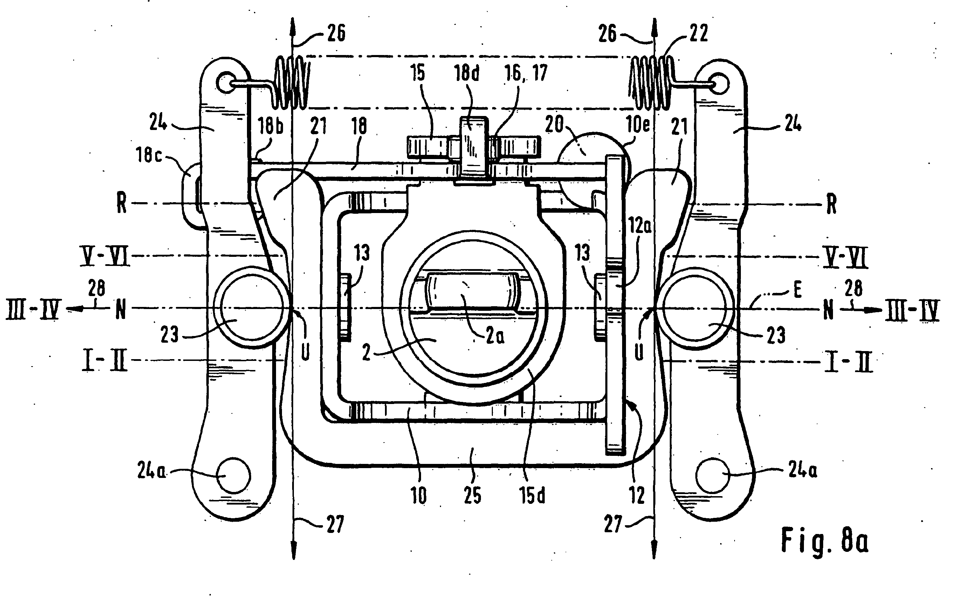

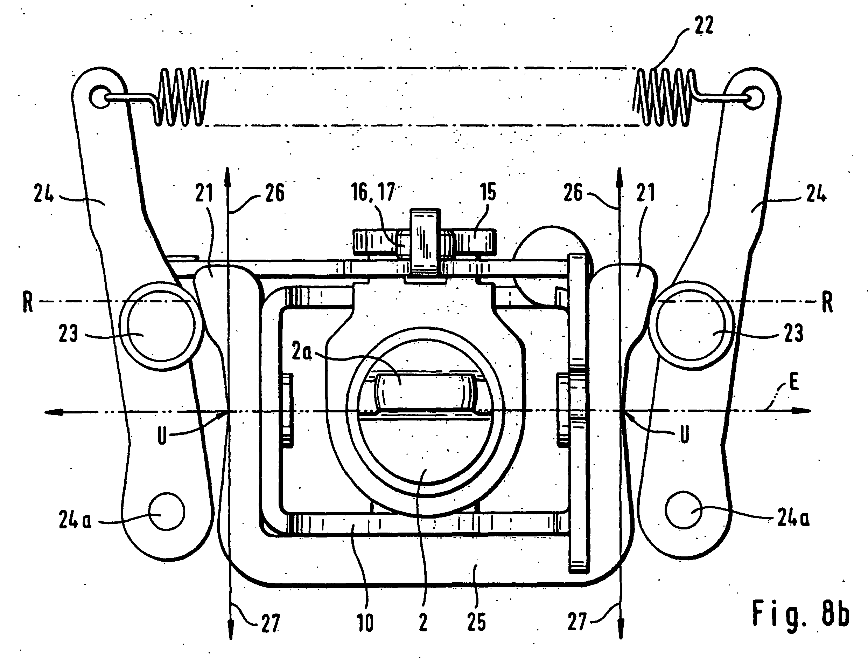

Die Lageranordnung 1 weist eine Vorrichtung zum Erhöhen von Wählkräften auf. Wie aus den Figuren 8a und 8b zu entnehmen ist, ist die Vorrichtung aus zwei Rampen 21, jeweils einer gegen die Rampe 21 mittels einer Feder 22 vorgespannten Ablaufrolle 23 sowie zwei Hebeln 24 gebildet. Die Rampen 21 sind an einem bügelförmigen Blech 25 ausgebildet. Das Blech 25 ist an der Konsole 10 befestigt. Die Hebel 24 sind jeweils um einen zum nicht dargestellten Gehäuse festen Drehpunkt 24a in Richtung der Konsole 10 schwenkbar angeordnet. Jede der Ablaufrollen 23 ist drehbar an einem der Hebel 24 angeordnet. Die Zugfeder 22 ist jeweils mit einem ihrer Enden an einem zu dem Drehpunkt 24a entgegengesetzten Ende des Hebels 24 eingehakt. Die Hebel 24 sind mittels der Zugfeder gegeneinander und somit gegen die Konsole 10 vorgespannt. Dabei wird jeweils eine der Rollen 23 über die Hebel 24 gegen jeweils eine der Rampen 21 gezogen.

Die Rampen 21 sind in Abschnitte unterschiedlichen Anstieges eingeteilt und weisen zueinander die gleiche Rampenkontur auf. Die Kontur einer jeden Rampe 21 steigt über zwei in entgegengesetzte Richtung weisenden Abszissen 26, 27 von einem Koordinatenursprung U ausgehend an. Die Abszissen 26 und 27 gehen quer von einer gedachten Ebene E ab und sind somit parallel zur Schwenkachse 8a des Schalthebels 2 ausgerichtet (Figur 7, Figur 8a, Figur 8b). Die Ebene E verläuft mit der Kippachse 9a des Schalthebels 2 und ist rechtwinklig von der Schwenkachse 8a des Schalthebels 2 durchdrungen. Der Koordinatenursprung U liegt in der Ebene E. Ein um die Kippachse 9a geschwenkter Schalthebel 2 schwenkt die Konsole 10 mit der Rampe 21 gegen die in Schwenkrichtung feste Ablaufrolle 23. Die Kontur der Rampen 21 bewegt sich in Schwenkrichtung zu der Rotationsachse der Ablaufrolle 23, wodurch die gegen die Rampe 21 vorgespannte jeweilige Ablaufrolle 23 an der Rampe 21 aufsteigend abrollt. Die rechtwinklig zu den Abszissen 26 und 27 ausgerichtete Ordinate 28 verläuft parallel zu der Kippachse 9a mit der Ebene E.

Da die Rampe 21 beidseitig des Koordinatenursprungs U von der Ebene E weg ansteigt, zentriert sich jeweils eine Rolle 23 an einer Rampe 21 in der Neutralstellung N des Schalthebels an dem Koordinatenursprung U. Die Rampe 21 verläuft sowohl über der Abszisse 26 als auch über der Abszisse 27 anfangs flach ansteigend. Die an den Abschnitten mit dem flachen Anstieg aufsteigenden Ablaufrollen 23 erzeugen an dem zum Wählen einer Gasse mit Vorwärtsgängen geschwenkten Schalthebel 2 eine relativ geringe Wählkraft. Beim Schalten eines der Gänge aus den Gassen verharren die Ablaufrollen 23 jeweils in einer der mit I-II oder V-VI gekennzeichneten Positionen auf der jeweiligen Rampe 21. In diesen Positionen steht der Schalthebel 2 in einer der Gassen I-II oder V-VI, aus der dann in der jeweiligen Gasse durch Schwenken des Schaltfingers 2 ein Gang schaltbar ist. Wird der Schalthebel 2 mit der Konsole 10 über die Position V-VI weiter hinausgeschwenkt, so trifft die an der Rampe 21 aufsteigende Ablaufrolle 23 auf einen Abschnitt der Rampe 21 der stark von der Abszisse 26 weg abgeknickt ansteigt. An der Konsole 10 und somit an dem Schalthebel 2 wird aufgrund des steilen Anstieges eine Wählkraft erzeugt, die deutlich über der Wählkraft zur Wahl der Vorwärtsgänge liegt. Der Schalthebel 2 ist im Begriff sich in die Gasse zum Schalten des Rückwärtsganges R zu bewegen. Dem steilen Anstieg an der Rampe 21 folgt schließlich bis in die Position R wieder ein flacher Anstieg. Steht die Ablaufrolle 23 in der Position R, ist die Gasse des Rückwärtsganges R gewählt. Diese Stellung ist in der Figur 8b zeichnerisch dargestellt. Aus der Stellung R ist der Schalthebel 2 um die Schwenkachse 8a zum Schalten des Rückwärtsganges R schwenkbar.

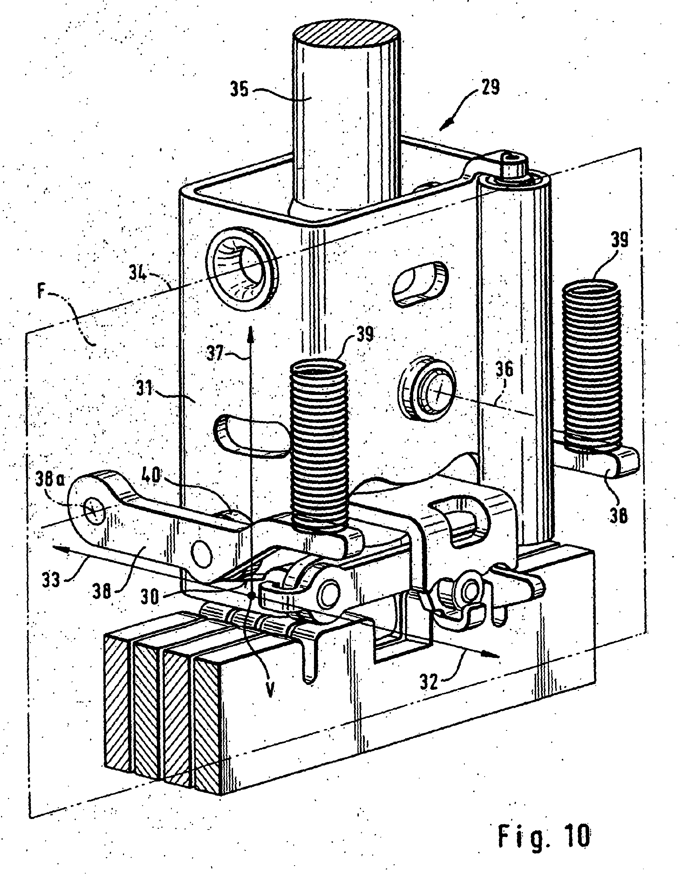

Figur 10 zeigt ein weiteres Ausführungsbeispiel einer erfindungsgemäßen Lageranordnung. Die Lageranordnung 29 ist ohne Gehäuse dargestellt. Ihr Aufbau entspricht im Wesentlichen der Lageranordnung 1 nach den Figuren 1 bis 9. Sie unterscheidet sich in ihrem Aufbau jedoch von der Anordnung der Vorrichtung zum Erhöhen der Wählkraft. Die Lageranordnung 29 weist zwei Rampen 30 auf, von denen eine zeichnerisch dargestellt und die andere durch eine Konsole 31 verdeckt ist. Die Rampe 30 steigt wie in dem vorgenannten Beispiel über zwei in entgegengesetzte Richtungen weisenden Abszissen 32 und 33 an. Die Abszissen gehen rechtwinklig von einer gedachten, mit der Kippachse 34 des Schalthebels 35 verlaufenden sowie senkrecht von der Schwenkachse 36 des Schalthebels 35 durchdrungenen Ebene F ab. Der Koordinatenursprung V des Koordinatensystems liegt in der Ebene F. Von dem Koordinatenursprung V geht rechtwinklig zu den Abszissen 32 und 33 eine mit der Ebene F verlaufende Ordinate 37 ab. Die Rampe 30 steigt über den Abszissen 32 von dem Koordinatenursprung V aus an und ist somit der Kippachse 34 zugewandt. Jeweils ein um einen Drehpunkt 38a schwenkbar zu dem nicht dargestellten Gehäuse gelagerter Hebel 38 ist mittels einer Druckfeder 39 gegen jeweils eine Rampe 30 vorgespannt. An jedem der Hebel 38 ist eine Ablaufrolle 39 drehbar befestigt. Jede der Federn 39 ist eine Druckfeder und drückt die jeweils einen der Hebel 38 mit der Ablaufrolle 40 gegen die Rampe 30. Der um die Kippachse 34 mit der Konsole 31 geschwenkte Schalthebel 35 schwenkt die Rampen 30 gegen die in Bewegungsrichtung der Rampe 30 an dem Hebel 38 feste Ablaufrolle 40. Die Ablaufrolle 40 steigt, an der Rampe 30 abrollend, an der Rampe 30 auf.

### Bezugszeichen

- 1: Lageranordnung
- 2: Schalthebel
- 2a: Schaltfinger
- 2b: Mittelachse
- 2c: Schaltknauf
- 3: Gehäuse
- 4: Schaltschiene
- 4a: Eingriffsnut
- 4b: Schlitz
- 5: Schaltschiene
- 5a: Eingriffsnut
- 6: Schaltschiene
- 6a: Eingriffsnut
- 7: Schaltschiene
- 7a: Eingriffsnut
- 8: Schwenkbolzen
- 8a: Schwenkachse
- 9: Kippbolzen
- 9a: Kippachse
- 10: Konsole
- 10a: Lagerauge
- 10b: Lagerauge
- 10c: Wand
- 10d: Öffnung
- 10e: Hülse
- 11: Anschlag
- 11 a: Langloch
- 12: Sperrfinger
- 12a: Freimachung
- 13: Gleitlager
- 14: Langloch
- 15: Rastkontur
- 15a: Rastvertiefung
- 15b: Rastvertiefung
- 15c: Rastvertiefung
- 15d: Verlängerung
- 16: Rastelement
- 17: Rolle
- 17a: Bolzen
- 18: Kipphebel
- 18a: Kipppunkt
- 18b: Bolzen
- 18c: Ende
- 18d: Ende
- 19: Vorsprung
- 20: Feder
- 21: Rampe
- 22: Feder
- 23: Ablaufrolle
- 24: Hebel
- 24a: Drehpunkt
- 25: Blech
- 26: Abszisse
- 27: Abszisse
- 28: Ordinate
- 29: Lageranordnung
- 30: Rampe
- 31: Konsole
- 32: Abszisse
- 33: Abszisse
- 34: Kippachse
- 35: Schalthebel
- 36: Schwenkachse
- 37: Ordinate
- 38: Hebel
- 38a: Drehpunkt
- 39: Feder
- 40: Ablaufrolle

## Patentansprüche

1. Lageranordnung (1, 29) zur schwenkbaren Lagerung eines Schalthebels (2, 35) mittels einer Konsole (10, 31) in einem Gehäuse (3), wobei die Lageranordnung (1, 29) den Schalthebel (2, 35) in der Konsole (10, 31) um eine Schwenkachse (8a, 36) zu der Konsole (10, 31) schwenkbar lagert sowie den Schalthebel (2, 35) mit der Konsole (10, 31) um eine quer zur Schwenkachse (8a, 36) ausgerichtete Kippachse (9a, 34) schwenkbar zu dem Gehäuse (3) lagert und wobei der Schalthebel (2, 35) an einem freien Ende einen um die Kippachse (9a, 34) sowie die Schwenkachse (8a, 36) schwenkbaren Schaltfinger (2a) aufweist, wobei die Kippachse (9a, 34) und die Schwenkachse (8a, 36) zueinander beabstandet verlaufen, **dadurch gekennzeichnet, dass** die Lageranordnung (1, 29) an der Konsole (10, 31) wenigstens ein Langloch (11a) aufweist, wobei das Langloch (11a) sich in die Schwenkrichtung des um die Schwenkachse (8a, 36) schwenkbaren Schalthebels (2, 35) erstreckt und dass in das Langloch (11a) ein aus dem Schalthebel (2, 35) hervorstehender Anschlag (11) eingreift, wobei der Anschlag (11) zu der Schwenkachse (8a, 36) beabstandet ist und wobei der Anschlag (11) in dem Langloch (11a) den Schwenkwinkel des um die Schwenkachse (8a, 36) schwenkenden Schalthebels (2, 35) begrenzt.

2. Lageranordnung nach Anspruch 1, **dadurch gekennzeichnet, dass** die Schwenkachse (8a, 36) dem Schaltfinger (2a) im Vergleich zur Lage der Kippachse (9a, 34) am nächsten liegt.

3. Lageranordnung nach Anspruch 1, **dadurch gekennzeichnet, dass** dem Schaltfinger (2a) wenigstens eine erste Schaltschiene (4, 5, 6, 7) und eine zweite Schaltschiene (4, 5, 6, 7) zugeordnet sind, wobei der um die Kippachse (9a, 34) geschwenkte Schaltfinger (2a) formschlüssig beweglich wahlweise in eine der Schaltschienen (4, 5, 6, 7) eingreift und wobei die Schaltschiene (4, 5, 6, 7), in die der Schaltfinger (2a) eingreift, mittels des um die Schwenkachse (8a, 36) schwenkenden Schaltfingers (2a) in mindestens eine Richtung längs verschiebbar ist.

4. Lageranordnung nach Anspruch 1, **dadurch gekennzeichnet, dass** der Schalthebel (2, 35) zwischen einer ersten Wand und einer der ersten Wand gegenüberliegenden zweiten Wand der Konsole (10, 31) mit einem die Schwenkachse (8a, 36) aufweisenden Schwenkbolzen (8) gelagert ist, wobei wenigstens eine der Wände ein Lagerauge (10a) zur Lagerung des Schwenkbolzens (8) aufweist.

5. Lageranordnung nach Anspruch 1, **dadurch gekennzeichnet, dass** die Konsole (10, 31) mittels zwei sich gegenüberliegenden Kippbolzen (9) an dem Gehäuse (3) schwenkbar gelagert ist, wobei die Mittenachsen der Kippbolzen (9) und die Kippachse (9a) übereinstimmen und wobei die Kippbolzen (9) an der Konsole (10, 31) in Lageraugen (10b) eingreifen.

6. Lageranordnung nach Anspruch 5, **dadurch gekennzeichnet, dass** die Kippbolzen (9) drehfest in dem Gehäuse (3) aufgenommen sind, wobei die Konsole (10, 31) um die Kippbolzen (9) schwenkbar ist und dass in jedem der Lageraugen (10b) ein Gleitlager (13) zwischen einem der Kippbolzen (9) und der Konsole (10, 31) angeordnet ist.

7. Lageranordnung nach Anspruch 1, **dadurch gekennzeichnet, dass** die Lageranordnung (1, 29) an der Konsole (10, 31) wenigstens ein Langloch (14) aufweist, wobei das Langloch (14) sich in die Schwenkrichtung des um die Kippachse (9a, 34) schwenkbaren Schalthebels (2, 35) erstreckt und dass in das Langloch (14) ein aus dem Gehäuse (3) hervorstehender Anschlag eingreift, wobei der Anschlag zu der Kippachse (9a, 34) beabstandet ist und wobei der Anschlag in dem Langloch (14) den Schwenkwinkel des um die Kippachse (9a, 34) schwenkenden Schalthebels (2, 35) begrenzt.

8. Lageranordnung nach dem Oberbegriff von Anspruch 1, **dadurch gekennzeichnet, dass** in der Lageranordnung (1, 29) eine Rastkontur (15) mit wenigstens einer ersten Rastvertiefung (15a, 15b, 15c) und einer zweiten Rastvertiefung (15a, 15b, 15c) an dem Schalthebel (2, 35) vorgesehen ist und dass in der Lageranordnung (1, 29) ein Rastelement (16) gegen die Rastkontur (15) vorgespannt ist, wobei das Rastelement (16) bei Schwenkbewegungen des Schalthebels (2, 35) um die Kippachse (9a, 34) in die erste Rastvertiefung (15a, 15b, 15c) eingreift und wobei die Rastkontur (15) mittels des um die Schwenkachse (8a, 36) schwenkenden Schalthebels (2, 35) sich an dem Rastelement (16) solange entlang bewegt, bis das Rastelement (16) in der zweiten Rastausnehmung (15a, 15b, 15c) verrastet ist.

9. Lageranordnung nach Anspruch 8, **dadurch gekennzeichnet, dass** die Rastkontur (15) an dem Schalthebel (2, 35) bewegungsfest angeordnet ist und dass das Rastelement (16) an der Konsole (10, 31) geführt ist.

10. Lageranordnung nach Anspruch 9, **dadurch gekennzeichnet, dass** das Rastelement (16) eine rotierbare Rolle (17) an einem Kipphebel (18) ist, wobei der Kipphebel (18) zumindest um einen Kipppunkt (18a) schwenkbar an der Konsole (10, 31) befestigt und dabei mit wenigstens einer sich an der Konsole (10, 31) abstützenden sowie von dem Kipppunkt (18a) entfernt an dem Kipphebel (18) angreifenden Feder (20) gegen die Rastkontur (15) vorgespannt ist und wobei die durch den Kipppunkt (18a) verlaufende Kippachse des Kipphebels (18) und die Rotationsachse der Rolle (17) parallel zur Schwenkachse (8a, 36) des Schalthebels (2, 35) ausgerichtet sind.

11. Lageranordnung nach Anspruch 10, **dadurch gekennzeichnet, dass** an der Konsole (10, 31) ein mit der Kippachse (9a, 34) der Konsole (10, 31) gleichgerichteter und von der Rotationsachse der Rolle (17) wegweisender Vorsprung (19) aus der Konsole (10, 31) hervorsteht, wobei der Kipphebel (18) aus Blech gebildet und mittels eines Bolzens (18b) an dem Vorsprung (19) um den Kipppunkt (18a) schwenkbar gelagert ist und dass der Kipphebel (18) ein hakenförmiges Ende (18c) aufweist, wobei das hakenförmige Ende (18c) den Vorsprung (19) an einer von dem Kipphebel (18) abgewandten Seite, dabei den Kipphebel (18) an dem Vorsprung (19) sichernd, zumindest teilweise hintergreift.

12. Lageranordnung nach Anspruch 10, **dadurch gekennzeichnet, dass** der Kipphebel (18) aus Blech gebildet ist und dass die Rolle (17) mittels eines Bolzens (17a) an dem Kipphebel (18) um die Rotationsachse beweglich gelagert ist, wobei der Kipphebel (18) ein hakenförmiges Ende (18d) aufweist und wobei das hakenförmige Ende (18d) die Rolle (17) an einer von dem Kipphebel (18) abgewandten Seite, dabei die Rolle (17) an dem Kipphebel (18) sichernd, zumindest teilweise hintergreift.

13. Lageranordnung nach Anspruch 10, **dadurch gekennzeichnet, dass** die Rolle (17) mittels einer den Kipphebel (18) in Richtung der Schwenkachse (8a, 36) ziehenden Zugfeder (20) gegen die Rastkontur (15) vorgespannt ist.

14. Lageranordnung nach Anspruch 13, **dadurch gekennzeichnet, dass** die Zugfeder (20) in einer Hülse (10e) zu der Konsole (10, 31) geführt mit einem Federende an der Konsole (10, 31) eingehängt ist.

15. Lageranordnung nach Anspruch 9, **dadurch gekennzeichnet, dass** die Rastkontur (15) an einem von dem Schalthebel (2, 35) abstehenden Blech ausgebildet ist, wobei das Blech eine von der Schwenkachse (8a, 36) durchdrungene Wand (10c) der Konsole an einer Öffnung (10d) in der Wand (10c) durchgreift, wodurch die Rastkontur (15) mittels der Rolle (17) außenseitig der Konsole (10, 31) beaufschlagbar ist und dass die Rastkontur (15) mit quer zur Schwenkachse (8a, 36) des Schalthebels (2, 35) hintereinander ausgerichteten und aneinander anschließenden Rastvertiefungen (15a, 15b, 15c) versehen ist.

16. Lageranordnung nach Anspruch 1, **dadurch gekennzeichnet, dass** die Lageranordnung (1, 29) eine Vorrichtung zum Erhöhen von Wählkräften aufweist, wobei die Vorrichtung zumindest eine zur Konsole feste Rampe (21, 30) und mindestens einer mittels wenigstens einer Feder (39) gegen die Rampe (21, 30) vorgespannten Ablaufrolle (23, 40) gebildet ist, wobei die Rampe (21, 30) bei Schwenkbewegungen des Schalthebels (2, 35) um die Kippachse (9a, 34) mit der Konsole (10, 31) schwenkt und die an dem Gehäuse (3) abgestützte Ablaufrolle (23, 40) dabei auf der Rampe (21, 30) abrollt.

17. Lageranordnung nach Anspruch 16, **dadurch gekennzeichnet, dass** die Rampe (21, 30) über wenigstens einer quer von einer gedachten Ebene abgehenden gedachten Abszisse (26, 27, 32, 33) ansteigt, wobei die Ebene mit der Kippachse (9a, 34) verläuft sowie dabei rechtwinklig von der Schwenkachse (8a, 36) durchdrungen ist und wobei die Rampe (21, 30) über der Abszisse (26, 27, 32 33) von der Ebene weg ansteigend verläuft, wodurch die Ablaufrolle (23, 40) bei einem um die Kippachse (34) geschwenkten Schalthebel (2, 35) gegen die Kraft der Feder (22, 39) an der Rampe aufsteigt.

18. Lageranordnung nach Anspruch 17, **dadurch gekennzeichnet, dass** die den Verlauf der Rampe (21) beschreibende Ordinate (28) parallel zu der Kippachse (9a) mit der Ebene verläuft.

19. Lageranordnung nach Anspruch 18, **dadurch gekennzeichnet, dass** Ablaufrolle (23) drehbar an einem Hebel (24) befestigt ist, wobei der Hebel (24) um einen zu dem Gehäuse (3) festen Drehpunkt (24a) schwenkbar ist und mit wenigstens einer von dem Drehpunkt (24a) entfernt an dem Hebel (24) angreifenden Feder (22) über die Ablaufrolle (23) gegen die Rampe (21) vorgespannt ist und wobei die durch den Drehpunkt (24a) verlaufende Drehachse des Hebels (24) und die Rotationsachse der Ablaufrolle (23) quer zur Kippachse (9a) des Schalthebels (2) ausgerichtet sind.

20. Lageranordnung nach Anspruch 19, **dadurch gekennzeichnet, dass** an der Konsole (10) zwei der Rampen (21) angeordnet sind und dass auf jede der Rampen (21) jeweils einer der Hebel (24) mit jeweils einer der Ablaufrollen (23) wirkt, wobei die Hebel (24), die Konsole (10) mit den Rampen (21) zwischen sich nehmend, gegeneinander mittels wenigstens einer Zugfeder (22) verspannt sind und wobei die Zugfeder (22) jeweils an einem dem Drehpunkt (24a) abgewandten freien Ende eines jeden der Hebel (24) eingehängt ist.

21. Lageranordnung nach Anspruch 17, **dadurch gekennzeichnet, dass** die den Verlauf der Rampe (30) beschreibende Ordinate (37) senkrecht zu der Kippachse (34) ausgerichtet mit der Ebene verläuft.

22. Lageranordnung nach Anspruch 21, **dadurch gekennzeichnet, dass** Ablaufrolle (40) drehbar an einem Hebel (38) befestigt ist, wobei der Hebel (38) um einen zu dem Gehäuse (3) festen Drehpunkt (38a) schwenkbar ist und mit wenigstens einer von dem Drehpunkt (38a) entfernt an dem Hebel (38) angreifenden Feder (39) über die Ablaufrolle (40) gegen die Rampe (30) vorgespannt ist und wobei die durch den Drehpunkt (38a) verlaufende Drehachse des Hebels (38) und die Rotationsachse der Ablaufrolle (40) parallel zur Kippachse (34) des Schalthebels (35) ausgerichtet sind.

23. Lageranordnung nach Anspruch 22, **dadurch gekennzeichnet, dass** an der Konsole (31) zwei der Rampen (30) angeordnet sind und dass auf jede der Rampen (30) jeweils einer der Hebel (38) mit jeweils einer der Ablaufrollen (40) wirkt, wobei jeder der Hebel (38) mittels jeweils mindestens Feder (39) über eine der Ablaufrollen (40) gegen die Rampe (30) vorgespannt ist.

24. Lageranordnung nach einem der Ansprüche 19 oder 22, **dadurch gekennzeichnet, dass** die Rampe (21, 30) ausgehend von dem in der Ebene liegenden Koordinatenursprung über einer ersten Abszisse (26, 27, 32, 33) sowie über einer entgegengesetzt zu der ersten Abszisse (26, 27, 32, 33) gerichteten zweiten Abszisse (26, 27, 32, 33) beidseitig von der Ebene weg ansteigt, wobei die Rampe (21, 30) mittels der am Koordinatenursprung an der Rampe (21, 30) zentrierten Ablaufrolle (23, 40) den Schalthebel (2, 35) in einer Neutralstellung hält und dass die Rampe (21, 30) über der ersten Abszisse (26, 33) von dem Koordinatenursprung weg flach sowie über der zweiten Abszisse (27, 32) anfangs flach ansteigt, wobei die Rampe (21, 30) in ihrem weiteren Verlauf über der zweiten Abszisse (27, 32) an die flach ansteigende Rampe (21, 30) anschließend von der zweiten Abszisse (27, 32) weg abgeknickt ansteigt und schließlich flach ausläuft und wobei die Ablaufrolle (23, 40) an der flach ansteigenden Rampe (21, 30) abrollt, wenn der Schalthebel (2, 35) um die Kippachse (9a, 34) aus der Neutralstellung wahlweise in eine Schwenkrichtung schwenkt, sowie auf die abgeknickt ansteigende Rampe (21, 30) trifft, wenn der Schalthebel (2, 35) um die Kippachse (9a, 34) auf die zweite Abszisse (27, 32) zu schwenkt.

25. Lageranordnung nach Anspruch 3, **dadurch gekennzeichnet, dass** jede der Schaltschienen (4, 5, 6, 7) mit einem in Richtung der Konsole (10, 31) sowie in die Schwenkrichtungen des um die Kippachse (9a, 34) geschwenkten Schalthebels (2, 35) offenen Schlitz (4b) versehen ist und dass in die Schlitze (4b) wahlweise ein an der Lageranordnung (1, 29) ausgebildetes Sperrglied zum wahlweisen Festsetzen wenigstens einer der Schaltschienen (4, 5, 6, 7) eingreift.

26. Lageranordnung nach Anspruch 25, **dadurch gekennzeichnet, dass** das Sperrglied ein an der Konsole (10, 31) fester sowie von der Konsole (10, 31) abgehender und dabei in wenigstens in einen der Schlitze (4b) formschlüssig eingreifender Sperrfinger (12) ist, wobei die erste Schaltschiene (4, 5, 6, 7) mittels des Sperrfingers (12) zu der zweiten Schaltschiene (4, 5, 6, 7) längs festgesetzt ist, wenn der um die Kippachse (9a, 34) geschwenkte Schaltfinger (2a) formschlüssig beweglich in die zweite Schaltschiene (4, 5, 6, 7) eingreift und wobei die zweite Schaltschiene (4, 5, 6, 7) mittels des Sperrfingers (12) zu der ersten Schaltschiene (4, 5, 6, 7) längs festgesetzt ist, wenn der um die Kippachse (9a, 34) geschwenkte Schaltfinger (2a) formschlüssig beweglich in die erste Schaltschiene (4, 5, 6, 7) eingreift und dass der mit der Konsole (10, 31) um die Kippachse (9a, 34) schwenkende Sperrfinger (12) innerhalb der in Schwenkrichtung des Sperrfingers (12) hintereinander liegenden und zueinander ausgerichteten Schlitze (4b) solange schwenkbar ist, bis der Schaltfinger (2a) in eine der gewählten längs beweglichen Schaltschienen (4, 5, 6, 7) sowie der Sperrfinger (12) in den Schlitz von zumindest einer festzusetzenden Schaltschiene (4, 5, 6, 7) formschlüssig eingreifen.

27. Lageranordnung nach Anspruch 26, **dadurch gekennzeichnet, dass** dem Schaltfinger (2a) zumindest drei der Schaltschienen (4, 5, 6, 7) zugeordnet sind, wobei der Sperrfinger (12) in zwei der Schaltschienen (4, 5, 6, 7) gleichzeitig und der Schaltfinger (2a) in eine der längs mittels des Schaltfingers (2a) beweglichen Schaltschienen (4, 5, 6, 7) formschlüssig eingreift und dass der Sperrfinger (12) eine den Sperrfinger (12) in Schwenkrichtung des Sperrfingers (12) unterbrechende Freimachung (12a) aufweist, die beim Festsetzen von zwei unmittelbar zu der längs frei beweglichen Schaltschiene (4, 5, 6, 7) benachbarten Schaltschienen (4, 5, 6, 7) über dem Schlitz (4b) der längs frei beweglichen Schaltschiene (4, 5, 6, 7) steht und wobei die mit dem Schaltfinger (2a) bewegliche Schaltschiene (4, 5, 6, 7) den Sperrfinger (12) an der Freimachung (12a) zu dem Sperrfinger (12) berührungslos durchdringt.

## Claims

1. Mounting arrangement (1, 29) for the pivotal mounting of a gearshift lever (2, 35) in a housing (3) by means of a bracket (10, 31), said mounting arrangement (1, 29) mounting the gearshift fork (2, 35) in the bracket (10, 31) for pivoting relative to the bracket (10, 31) about an axis of pivot (8a, 36), and further mounting the gearshift lever (2, 35) for pivoting together with the bracket (10, 31) relative to the housing (3) about an axis of tilt (9a, 34) that extends crosswise to the axis of pivot (8a, 36), said gearshift lever (2, 35) comprising on one free end, a gearshift finger (2a) that can pivot about the axis of tilt (9a, 34) and about the axis of pivot (8a, 36), said axis of tilt (9a, 34) and said axis of pivot (8a, 36) extending spaced apart from each other, **characterised in that** the mounting arrangement (1, 29) comprises at least one oblong hole (11 a) on the bracket (10, 31), which oblong hole (11 a) extends in the direction of pivot of the gearshift lever (2, 35) that can pivot about the axis of pivot (8a, 36), and that a stop (11) projecting out of the gearshift lever (2, 35) engages into the oblong hole (11a), the stop (11) is spaced from the axis of pivot (8a, 36), and the stop (11) in the oblong hole (11 a) limits the angle of pivot of the gearshift lever (2, 35) pivoting about the axis of pivot (8a, 36).

2. Mounting arrangement according to claim 1, **characterised in that**, compared to the position of the axis of tilt (9a, 34), the axis of pivot (8a, 36) is situated nearer to the gearshift finger (2a).

3. Mounting arrangement according to claim 1, **characterised in that** at least one first gearshift rail (4, 5, 6, 7) and one second gearshift rail (4, 5, 6, 7) are associated to the gearshift finger (2a), which gearshift finger (2a), pivoted about the axis of tilt (9a, 34), engages selectively into one of the gearshift rails (4, 5, 6, 7) for positive movement, and the gearshift rail (4, 5, 6, 7) into which the gearshift finger (2a) engages can be displaced longitudinally in at least one direction by the gearshift finger (2a) pivoting about the axis of pivot (8a, 36).

4. Mounting arrangement according to claim 1, **characterised in that** the gearshift lever (2, 35) is mounted between a first wall and an opposing second wall of the bracket (10, 31) by means of a pivoting pin (8) that comprises the axis of pivot (8a, 36), at least one of the walls comprising a mounting eye (10a) for mounting the pivoting pin (8).

5. Mounting arrangement according to claim 1, **characterised in that** the bracket (10, 31) is mounted on the housing (3) for pivoting by means of two opposing tilting pins (9), the central axes of the tilting pins (9) and the axis of tilt (9a) coincide with one another, and the tilting pins (9) engage into mounting eyes (10b) on the bracket (10, 31).

6. Mounting arrangement according to claim 5, **characterised in that** the tilting pins (9) are received rotationally fast in the housing (3), the bracket (10, 31) being able to pivot about the tilting pins (9), and **in that** a sliding bearing (13) is arranged in each of the mounting eyes (10b) between one of the tilting pins (9) and the bracket (10, 31).

7. Mounting arrangement according to claim 1, **characterised in that** the mounting arrangement (1, 29) comprises at least one oblong hole (14) on the bracket (10, 31), which oblong hole (14) extends in the direction of pivot of gearshift lever (2, 35) that can pivot about the axis of tilt (9a, 34), and that a stop projecting out of the housing (3) engages into the oblong hole (14), the stop is spaced from the axis of tilt (9a, 34), and the stop in the oblong hole (14) limits the angle of pivot of the gearshift lever (2, 35) pivoting about the axis of tilt (9a, 34).

8. Mounting arrangement according to the preamble of claim 1, **characterised in that**, in the mounting arrangement (1, 29), a catch contour (15) with at least one first catch depression (15a, 15b, 15c) and one second catch depression (15a, 15b, 15c) are provided on the gearshift lever (2, 35) and that, in the mounting arrangement (1, 29), a detent element (16) is biased against the catch contour (15), upon pivoting movements of the gearshift lever (2, 35) about the axis of tilt (9a, 34), the detent element (16) engages into the first catch depression (15a, 15b, 15c), and by means of the gearshift lever (2, 35) pivoting about the axis of pivot (8a, 36), the catch contour (15) moves longitudinally on the detent element (16) till the detent element (16) comes to be snapped into the second catch depression (15a, 15b, 15c).

9. Mounting arrangement according to claim 8, **characterised in that** the catch contour (15) is fixed against relative motion on the gearshift lever (2, 35) and the detent element (16) is guided on the bracket (10, 31).

10. Mounting arrangement according to claim 9, **characterised in that** the detent element (16) is a rotating roller (17) on a rocker arm (18), which rocker arm (18) is fixed on the bracket (10, 31) for pivoting about at least one point of tilt (18a) while being biased against the catch contour (15) by at least one spring (20) that is supported on the bracket (10, 31) and is applied to the rocker arm (18) at a distance from the point of tilt (18a), and that the axis of tilt of the rocker arm (18) extending through the point of tilt (18a) and the axis of rotation of the roller (17) are oriented parallel to the axis of pivot (8a, 35) of the gearshift lever (2, 35).

11. Mounting arrangement according to claim 10, **characterised in that** a projection (19) projecting out of the bracket (10, 31) has the same orientation as the axis of tilt (9a, 34) of the bracket (10, 31) and points away from the axis of rotation of the roller (17), the rocker arm (18) is made out of sheet metal and is mounted on the projection (19) by means of a pin (18b) for pivoting about the point of tilt (18a), and the rocker arm (18) possesses a hook-shaped end (18c) that engages at least partially behind the projection (19) on a side turned away from the rocker arm (18) thus securing the rocker arm (18) on the projection (19).

12. Mounting arrangement according to claim 10, **characterised in that** the rocker arm (18) is made out of sheet metal and the roller (17) is mounted on the rocker arm (18) by means of a pin (17a) for moving about the axis of rotation, and the rocker arm (18) possesses a hook-shaped end (18d) that engages at least partially behind the roller (17) on a side turned away from the rocker arm (18) thus securing the roller (17) on the rocker arm (18).

13. Mounting arrangement according to claim 10, **characterised in that** the roller (17) is biased against the catch contour (15) by means of a tension spring (20) that pulls the rocker arm (18) towards the axis of pivot (8a, 36).

14. Mounting arrangement according to claim 13, **characterised in that** the tension spring (20) is guided relative to the bracket (10, 31) in a bushing (10e) and is suspended with one spring end on the bracket (10, 31).

15. Mounting arrangement according to claim 9, **characterised in that** the catch contour (15) is provided on a sheet metal protruding from the gearshift lever (2, 35), the sheet metal engages through an opening (10d) of a wall (10c) of the bracket (10, 31), which wall (10c) is penetrated by the axis of pivot (8a, 36), so that the catch contour (15) can be loaded through the roller (17) on the outside of the bracket (10, 31), and the catch contour (15) is provided with catch depressions (15a, 15b, 15c) that are situated behind one another crosswise to the axis of pivot (8a, 36) of the gearshift fork (2, 35) and adjoin one another.

16. Mounting arrangement according to claim 1, **characterised in that** the mounting arrangement (1, 29) comprises a device for augmenting selecting forces, which device comprises at least one ramp (21, 30) that is fixed relative to the bracket and at least one running roller (23, 40) that is biased by at least one spring (22, 39) against the ramp (21, 30), during pivoting movements of the gearshift lever (2, 35) about the axis of tilt (9a, 34), the ramp (21, 30) pivots with the bracket (10, 31), and the running roller (23, 40) supported on the housing (3) rolls on the ramp (21, 30).

17. Mounting arrangement according to claim 16, **characterised in that** the ramp (21, 30) ascends beyond at least one imaginary abscissa (26, 27, 32, 33) that extends crosswise from an imaginary plane, said plane extends with the axis of tilt (9a, 34) while being penetrated at a right angle by the axis of pivot (8a, 36), the ramp (21, 30) extends away from the plane while ascending beyond the abscissa (26, 27, 32, 33), so that when the gearshift lever (2, 35) is pivoted about the axis of tilt (9a, 34), the running roller (23, 40) travels up the ramp against the force of the spring (22, 39).

18. Mounting arrangement according to claim 17, **characterised in that** the ordinate (28) describing the gradient of the ramp (21) extends parallel to the axis of tilt (9a) with the plane.

19. Mounting arrangement according to claim 18, **characterised in that** the running roller (23) is fixed for rotation on a lever (24), which lever (24) can pivot about a fulcrum (24a) that is fixed relative to the housing (3), and which lever (24) is biased through the running roller (23) against the ramp (21) by at least one spring (22) that is applied to the lever (24) at a distance from the fulcrum (24a), and the axis of rotation of the lever (24) that extends through the fulcrum (24a) and the axis of rotation of the running roller (23) are oriented crosswise to the axis of tilt (9a) of the gearshift lever (2).

20. Mounting arrangement according to claim 19, **characterised in that** two of the ramps (21) are arranged on the bracket (10), one of the levers (24) acts through one of the running rollers (23) on each of the ramps (21), the levers (24), while embracing the bracket (10) with the ramps (21), are urged against each other by means of at least one tension spring (22), each of the tension springs (22) being suspended on a free end of the respective lever (24) turned away from the fulcrum (24a).

21. Mounting arrangement according to claim 17, **characterised in that** the ordinate (37) describing the gradient of the ramp (30) extends with the plane while being oriented perpendicularly to the axis of tilt (34).

22. Mounting arrangement according to claim 21, **characterised in that** the running roller (40) is fixed for rotation on a lever (38), which lever (38) can pivot about a fulcrum (38a) that is fixed relative to the housing (3), and which lever (38) is biased through the running roller (40) against the ramp (30) by at least one spring (39) that is applied to the lever (38) at a distance from the fulcrum (38a), and the axis of rotation of the lever (38) that extends through the fulcrum (38a) and the axis of rotation of the running roller (40) are oriented parallel to the axis of tilt (34) of the gearshift lever (35).

23. Mounting arrangement according to claim 22, **characterised in that** two of the ramps (30) are arranged on the bracket (31), one of the levers (38) acts through one of the running rollers (40) on each of the ramps (30), and each of the levers (38) is biased against the ramp (30) through one of the running rollers (40) by means of at least one tension spring (39).

24. Mounting arrangement according to one of the claims 19 or 22, **characterised in that** the ramp (21, 30), starting from the origin of coordinates situated in the plane, ascends on both sides away from the plane, beyond a first abscissa (26, 27, 32, 33) and beyond a second abscissa (26, 27, 32, 33) oriented in a direction opposite to the first abscissa (26, 27, 32, 33), by means of the running roller (23, 40) centered on the ramp (21, 30) at the origin of coordinates, the ramp (21, 30) retains the gearshift lever (2, 35) in a neutral position, the ramp (21, 30) ascends gradually beyond the first abscissa (26, 33) away from the origin of coordinates and beyond the second abscissa (27, 32) at first gradually and, in its further course beyond the second abscissa (27, 32) adjoining the gradually ascending ramp (21, 30), the ramp (21, 30) ascends away from the second abscissa (27, 32) at a sharp angle and finally runs out in a flat portion, the running roller (23, 40) rolls on the gradually ascending ramp (31, 30) when the gearshift lever (2, 35) pivots selectively out of the neutral position in one of the directions of pivot about the axis of tilt (9a, 34) and the running roller (23, 40) abuts against the sharply ascending ramp (21, 30) when the gearshift lever (2, 35) pivots about the axis of tilt (9a, 34) towards the second abscissa (27, 32).

25. Mounting arrangement according to claim 3 **characterised in that** each of the gearshift rails (4, 5, 6, 7) comprises a slot (4b) that is open in the direction of the bracket (10, 31) and in the directions of pivot of the gearshift lever (2, 35) pivoted about the axis of tilt (9a, 34), and a locking member configured on the mounting arrangement (1, 29) engages selectively into the slots (4b) for selectively immobilising at least one of the gearshift rails (4, 5, 6, 7).

26. Mounting arrangement according to claim 25, **characterised in that** the locking member is a locking finger (12) that is fixed on the bracket (10, 31) and projects from the bracket (10, 31) to engage positively into at least one of the slots (4b), the first gearshift rail (4, 5, 6, 7) is longitudinally immobilised relative to the second gearshift rail (4, 5, 6, 7) by means of the locking finger (12) when the gearshift finger (2a) pivoted about the axis of tilt (9a, 34) engages for positive movement into the second gearshift rail (4, 5, 6, 7), and the second gearshift rail (4, 5, 6, 7) is longitudinally immobilised relative to the first gearshift rail (4, 5, 6, 7) by means of the locking finger (12) when the gearshift finger (2a), pivoted about the axis of tilt (9a, 34), engages for positive movement into the first gearshift rail (4, 5, 6, 7), and the locking finger (12) pivoting together with the bracket (10, 31) about the axis of tilt (9a, 34) being able to pivot in the slots (4b) that are situated behind one another in the direction of pivot of the locking finger (12) and are aligned to one another, till the gearshift finger (2a) comes to engage positively into one of the selected longitudinally displaceable gearshift rails (4, 5, 6, 7) and the locking finger (12) comes to engage positively into the slot of at least one of the gearshift rails (4, 5, 6, 7) to be immobilised.

27. Mounting arrangement according to claim 26, **characterised in** the at least three of the gearshift rails (4, 5, 6, 7) are associated to the gearshift finger (2a), the locking finger (12) engages simultaneously into two of the gearshift rails (4, 5, 6, 7), and the gearshift finger (2a) engages positively into one of the gearshift rails (4, 5, 6, 7) that can be displaced longitudinally by means of the gearshift finger (2a), the locking finger (12) comprises a clearance (12a) that interrupts the locking finger (12) in pivoting direction of the locking finger (12), and, during immobilisation of two gearshift rails (4, 5, 6, 7) that are situated immediately next to the longitudinally freely displaceable gearshift rail (4, 5, 6, 7), said clearance (12a) is situated above the slot (4b) of the longitudinally freely displaceable gearshift rail (4, 5, 6, 7), and the gearshift rail (4, 5, 6, 7) that can be displaced by the gearshift finger (2a) passes through the locking finger (12), through the clearance (12a), without coming into contact with the locking finger (12).

## Revendications

1. Agencement de montage (1, 29) pour monter en pivotement un levier (2, 35) de changement de vitesse dans un boîtier (3) au moyen d'une console (10, 31), ledit agencement de montage (1, 29) montant le levier (2, 35) de changement de vitesse dans la console (10, 31) en pivotement autour d'un axe de pivotement (8a, 36) par rapport à la console (10, 31) et montant, en plus, le levier (2, 35) de changement de vitesse en pivotement par rapport au boîtier (3) avec la console (10, 31) autour d'un axe de basculement (9a, 34) qui s'étend en travers de l'axe de pivotement (8a, 36), le levier (2, 35) de changement de vitesse comprenant sur une extrémité libre, un doigt (2a) de changement de vitesse qui peut pivoter autour de l'axe de basculement (9a, 34) et autour de l' axe de pivotement (8a, 36), l' axe de basculement (9a, 34) et l' axe de pivotement (8a, 36) s'étendant à l'écart, l'un de l'autre, **caractérisé en ce que** l'agencement de montage (1, 29) comprend, au moins, un trou oblong (11 a) sur la console (10, 31), ledit trou oblong (11 a) s'étend dans la direction de pivotement du levier (2, 35) de changement de vitesse qui peut pivoter autour de l'axe de pivotement (8a, 36), **en ce qu'**une butée (11) qui fait saillie à partir du levier (2, 35) de changement de vitesse s'engage dans le trou oblong (11a), ladite butée (11) est écartée de l'axe de pivotement (8a, 36), et **en ce que** ladite butée (11) limite dans le trou oblong (11a) l'angle de pivotement du levier (2, 35) de changement de vitesse lorsque celui-ci pivote autour de l'axe de pivotement (8a, 36).

2. Agencement de montage selon la revendication 1, **caractérisé en ce que** en comparaison de la position de l'axe de basculement (9a, 34), l'axe de pivotement (8a, 36) est situé plus près du doigt (2a) de changement de vitesse.

3. Agencement de montage selon la revendication 1, **caractérisé en ce que**, au moins, une première réglette (4, 5, 6, 7) de changement de vitesse et une seconde réglette (4, 5, 6, 7) de changement de vitesse sont associées au doigt (2a) de changement de vitesse, ledit doigt (2a) de changement de vitesse, pivoté autour de l'axe de basculement (9a, 34), s'engage en mouvement positif, facultativement, dans l'une des réglettes (4, 5, 6, 7) de changement de vitesse, la réglette (4, 5, 6, 7) de changement de vitesse dans laquelle le doigt (2a) de changement de vitesse s'engage étant longitudinalement déplaçable dans, au moins, une direction par le doigt (2a) de changement de vitesse lorsque celui-ci pivote autour de l'axe de pivotement (8a, 36).

4. Agencement de montage selon la revendication 1, **caractérisé en ce que** le levier (2, 35) de changement de vitesse est monté au moyen d'un boulon (8) de pivotement entre une première paroi de la console (10, 31) et une seconde paroi de la console (10, 31) opposée à la première paroi, ledit boulon (8) comprenant l'axe de pivotement (8a, 36), et, au moins, l'une des parois comprenant un oeillet de montage (10a) pour le montage du boulon (8) de pivotement.

5. Agencement de montage selon la revendication 1, **caractérisé en ce que** la console (10, 31) est montée en pivotement sur le boîtier (3) au moyen de deux boulons (9) de basculement, les axes centraux des boulons (9) de basculement et l'axe de basculement (9a, 34) coïncidant, l'un avec l'autre, et les boulons (9) de basculement s'engeant dans des oeillets (10b) de montage sur la console (10, 31).

6. Agencement de montage selon la revendication 5, **caractérisé en ce que** les boulons (9) de basculement sont reçus de manière fixe en rotation dans le boîtier (3), la console (10, 31) pouvant pivoter autour des boulons (9) de basculement, et **en ce que** dans chaque oeillet (10b) de montage est agencé, entre l'un des boulons (9) de basculement et la console (10, 31) un palier lisse (13).

7. Agencement de montage selon la revendication 1, **caractérisé en ce que** l'agencement de montage (1, 29) comprend sur la console (10, 31), au moins, un trou oblong (14) qui s'étend dans le direction de pivotement du levier (2, 35) de changement de vitesse qui peut pivoter autour de l' axe de basculement (9a, 34), et **en ce qu'**une butée qui fait saillie à partir du boîtier (3) s'engage dans le trou oblong (14), ladite butée étant agencée à l'écart de l'axe de basculement (9a, 34) et limitant, dans le trou oblong (14), l'angle de pivotement du levier (2, 35) de changement de vitesse lorsque celui-ci pivote autour de l'axe de basculement (9a, 34).

8. Agencement de montage selon le préambule de la revendication 1, **caractérisé en ce que**, dans l'agencement de montage (1, 29) est prévu, sur le levier (2, 35) de changement de vitesse, un contour (15) d'arrêt ayant, au moins, une première cavité (15a, 15b, 15c) d'arrêt et une seconde cavité (15a, 15b, 15c) d'arrêt, **en ce que**, dans l'agencement de montage (1, 29), un élément (16) d'arrêt est précontraint contre le contour (15) d'arrêt, et **en ce que**, pendant des mouvements de pivotement du levier (2, 35) de changement de vitesse autour de l'axe de basculement (9a, 34), l'élément (16) d'arrêt s'engage dans la première cavité (15a, 15b, 15c) d'arrêt et, au moyen du levier (2, 35) de changement de vitesse lors de son pivotement autour de l'axe de pivotement (8a, 36), le contour (15) d'arrêt se déplace le long de l'élément (16) d'arrêt jusqu'au moment où l'élément (16) d'arrêt vient s'encliqueter dans la seconde cavité (15a, 15b, 15c) d'arrêt.

9. Agencement de montage selon la revendication 8, **caractérisé en ce que** le contour (15) d'arrêt est immobilisé sur le levier (2, 35) de changement de vitesse, et l'élément (16) d'arrêt est guidé sur la console (10, 31).

10. Agencement de montage selon la revendication 9, **caractérisé en ce que** l'élément (16) d'arrêt est un galet rotatif (17) sur un levier (18) de basculement qui est fixé en basculement sur la console (10, 31), au moins, autour d'un point d'appui (18a) en étant précontraint contre le contour (15) d'arrêt par au moins un ressort (20) qui est supporté sur la console (10, 31) et appliqué au levier (18) de basculement à l'écart du point d'appui (18a), et **en ce que** l'axe de basculement de levier (18) de basculement qui traverse le point d'appui (18a) et l'axe de rotation du galet (17) sont orientés parallèlement à l'axe de pivotement (8a, 36) du levier (2, 35) de changement de vitesse.

11. Agencement de montage selon la revendication 10, **caractérisé en ce que**, une saillie (19) s'étend à partir de la console (10, 31) en étant orientée dans la même direction que l'axe de basculement (9a, 34) de la console (10, 31) mais à l'opposé de l'axe de rotation du galet (17), le levier (18) de basculement est configuré en tôle et monté sur la saillie (19) en basculement autour du point d'appui (18a) au moyen d'un boulon (18b), et que le levier (18) de basculement comprend une extrémité (18c) en forme de crochet qui, d'un côté détourné du levier de basculement s'engage, au moins partiellement, derrière la saillie (19) en sécurisant, de ce fait, le levier (18) de basculement sur la saillie (19).

12. Agencement de montage selon la revendication 10, **caractérisé en ce que** le levier (18) de basculement est configuré en tôle et le galet (17) est monté au moyen d'un boulon (17a) sur le levier (18) de basculement pour mouvement autour de l'axe de rotation, et que le levier (18) de basculement comprend une extrémité (18d) en forme de crochet qui, d'un côté détourné du levier (18) de basculement s'engage, au moins partiellement, derrière le galet (17) en sécurisant, de ce fait, le galet (17) sur le levier (18) de basculement.

13. Agencement de montage selon la revendication 10, **caractérisé en ce que** le galet (17) est précontraint contre le contour (15) d'arrêt au moyen d'un ressort de tension (20) qui tire le levier (18) de basculement vers l'axe de pivotement (8a, 36).

14. Agencement de montage selon la revendication 13, **caractérisé en ce que** le ressort de tension (20) est guidé par rapport à la console (10, 35) dans une douille (10) en étant accroché avec l'une de ses extrémités sur la console (10, 31).

15. Agencement de montage selon la revendication 9, **caractérisé en ce que** le contour (15) d'arrêt est configuré sur une tôle qui fait saillie à partir du levier (2, 35) de changement de vitesse, ladite tôle s'engage au travers d'une ouverture (10d) d'une paroi (10c) de la console, laquelle paroi (10c) est pénétrée par l'axe de pivotement (8a, 36), de sorte que le contour (15) d'arrêt peut être sollicité en dehors de la console (10, 35) par le galet (17), et **en ce que** le contour (15) d'arrêt est muni de cavités (15a, 15b, 15c) d'arrêt qui sont orientées en travers de l'axe de pivotement (8a, 38), en étant situées, l'une derrière l'autre, et adjacentes, l'une à l'autre.

16. Agencement de montage selon la revendication 1, **caractérisé en ce que** l'agencement de montage (1, 29) comprend un dispositif d'augmentation de forces de sélection, ledit dispositif étant constitué, au moins, d'une rampe (21, 30) solidaire à la console et, au moins, d'un galet de roulement (23, 40) qui est précontraint contre la rampe (21, 30) par, au moins, un ressort (22, 39), et **en ce que**, pendant des mouvements de pivotement du levier (2, 35) de changement de vitesse autour de l'axe de basculement (9a, 34), la rampe (21, 30) pivote conjointement avec la console (10, 31), et le galet de roulement (23, 40) supporté sur le boîtier (3) roule sur la rampe (21, 30).

17. Agencement de montage selon la revendication 16, **caractérisé en ce que** la rampe (21, 30) monte au-delà, au moins, d'une abscisse (26, 27, 32, 33) imaginaire qui s'étend en direction transversale à partir d'un plan imaginaire, ce plan s'étend avec l'axe de basculement (9a, 34) en étant pénétré à angle droit par l'axe de pivotement (8a, 36), la rampe (21, 30) s'étend en montant au-delà de l' abscisse (26, 27, 32, 33) en s'éloignant du plan, de sorte que, lors d'un pivotement du levier (2, 35) de changement de vitesse autour de l'axe de basculement (9a, 34), le galet de roulement (23, 40) monte sur la rampe à l'opposé de la force du ressort (22, 39).

18. Agencement de montage selon la revendication 17, **caractérisé en ce que** l'ordonnée qui décrit le gradient de la rampe (21) s'étend avec le plan parallèlement à l'axe de basculement (9a, 34).

19. Agencement de montage selon la revendication 18, **caractérisé en ce que** le galet de roulement (23) est monté en rotation sur un levier (24) qui peut pivoter autour d'un point (24a) de pivotement solidaire au boîtier (3), ledit levier (24) étant précontraint contre la rampe (21) par l'intermédiaire du galet de roulement (23) par, au moins, un ressort (22) qui est appliqué au levier (24) à l'écart du point (24a) de pivotement, et **en ce que** l'axe de rotation du levier (24) qui s'étend à travers le point (24a) de pivotement et l'axe de rotation du galet de roulement (23) sont orientés en travers de l'axe de basculement (9a) du levier (2) de changement de vitesse.

20. Agencement de montage selon la revendication 19, **caractérisé en ce que** deux des rampes (21) sont agencées sur la console (10) et que l'un des leviers (24) agit sur chacune des rampes (21) par, à chaque fois, l'un des galets de roulement (23), les leviers (24), en entourant la console (10) avec les rampes (21), sont calés, l'un contre l'autre, au moyen, au moins, d'un ressort de tension (22) qui est accroché, à chaque fois, à une extrémité libre de chaque levier (24) détournée du point (24a) de pivotement.

21. Agencement de montage selon la revendication 17, **caractérisé en ce que** l'ordonnée (37) qui décrit le gradient de la rampe (30) s'étend avec le plan perpendiculairement à l'axe de basculement (34).

22. Agencement de montage selon la revendication 21, **caractérisé en ce que** le galet de roulement (40) est monté en rotation sur un levier (38) qui peut pivoter autour d'un point (38a) de pivotement solidaire au boîtier (3), ledit levier (38) étant précontraint contre la rampe (30) par l'intermédiaire du galet de roulement (40) par, au moins, un ressort (39) qui est appliqué au levier (38) à l'écart du point (38a) de pivotement, et **en ce que** l'axe de rotation du levier (38) qui s'étend à travers le point (38a) de pivotement et l'axe de rotation du galet de roulement (40) sont orientés parallèlement à l'axe de basculement (34) du levier (35) de changement de vitesse.

23. Agencement de montage selon la revendication 22, **caractérisé en ce que** deux des rampes (30) sont agencées sur la console (31) et que l'un des leviers (38) agit sur chacune des rampes (30) par, à chaque fois, l'un des galets de roulement (40), chacun des leviers (38) est précontraint contre la rampe (30) par l'intermédiaire de l'un des galets de roulement (40) par, au moins, un ressort (39).

24. Agencement de montage selon l'une des revendications 19 ou 22, **caractérisé en ce que** la rampe (21, 30), partant de l'origine des coordonnées située dans le plan, monte, de part et de l'autre du plan, en s'éloignant du plan au-delà d'une première abscisse (26, 27, 32, 33) et au-delà d'une seconde abscisse (26, 27, 32, 33) orientée à l'opposé de la première abscisse (26, 27, 32, 33), **en ce que**, par l'intermédiaire du galet de roulement (23, 40) qui est centré sur la rampe (21, 30) à l'origine des coordonnées, la rampe (21, 30) retient le levier (2, 35) de changement de vitesse dans une position neutre, **en ce que** la rampe (21, 30) monte faiblement au-delà de la première abscisse (26, 33) en s'éloignant de l'origine de coordonnées et au-delà de la seconde abscisse (27, 32), la rampe monte, d'abord faiblement, et dans sa course ultérieure qui se raccorde à la rampe (21, 30) à faible montée, la rampe (21, 30) monte, en s'éloignant de la seconde abscisse (27, 32), avec un angle aigu pour se terminer finalement par une portion plate, et **en ce que** le galet de roulement (23, 40) roule sur la rampe (21, 30) à faible montée lorsque le levier (2, 35) de changement de vitesse pivote à partir de la position neutre autour de l'axe de basculement (9a, 34), facultativement, dans l'une des directions de pivotement, et le galet de roulement (23, 40) vient se buter contre la rampe (21, 30) montant à angle aigu lorsque le levier (2, 35) de changement de vitesse pivote autour de l'axe de basculement (9a, 34) vers la seconde abscisse (27, 32).

25. Agencement de montage selon la revendication 3, **caractérisé en ce que** chacune des réglettes (4, 5, 6, 7) de changement de vitesse est munie d'une fente (4b) qui est ouverte en direction de la console (10, 31) et en les directions de pivotement du levier (2, 35) de changement de vitesse pivoté autour de l'axe de basculement (9a, 34), et qu'un organe de verrouillage configuré sur l'agencement de montage (1, 29) s'engage, facultativement, dans les fentes (4b) pour l'immobilisation facultative, au moins, de l'une des réglettes (4, 5, 6, 7) de changement de vitesse.

26. Agencement de montage selon la revendication 25, **caractérisé en ce que** l'organe de verrouillage est un doigt (12) de verrouillage qui est solidaire à la console (10, 31), fait saillie à partir de la console (10, 31) en s'engageant de manière positive dans, au moins, l'une de fentes (4b), **en ce que** la première réglette (4, 5, 6, 7) de changement de vitesse est immobilisée en direction longitudinale par rapport à la seconde réglette (4, 5, 6, 7) de changement de vitesse par le doigt (12) de verrouillage lorsque le doigt (2a) de changement de vitesse pivoté autour de l'axe de basculement (9a, 34) s'engage en mouvement positif dans la seconde réglette (4, 5, 6, 7) de changement de vitesse, **en ce que** la seconde réglette (4, 5, 6, 7) de changement de vitesse est immobilisée en direction longitudinale par rapport à la première réglette (4, 5, 6, 7) de changement de vitesse par le doigt (12) de verrouillage lorsque le doigt (2a) de changement de vitesse pivoté autour de l'axe de basculement (9a, 34) s'engage en mouvement positif dans la première réglette (4, 5, 6, 7) de changement de vitesse, et **en ce que** le doigt (2a) de changement de vitesse, pivotant avec la console (10, 31) autour de l'axe de basculement (9a, 34), peut pivoter dans les fentes (4b) situées l'une derrière l'autre, en direction de pivotement du doigt (12) de verrouillage et alignées, l'une à l'autre, jusqu'au moment où le doigt (2a) de changement de vitesse vient s'engager de manière positive dans l'une des réglettes (4, 5, 6, 7) de changement de vitesse sélectionnées et longitudinalement déplaçables et le doigt (12) de verrouillage vient s'engager de manière positive dans la fente, au moins, de l'une des réglettes (4, 5, 6, 7) de changement de vitesse à immobiliser.

27. Agencement de montage selon la revendication 26, **caractérisé en ce que**, au moins trois des réglettes (4, 5, 6, 7) de changement de vitesse sont associées au doigt (2a) de changement de vitesse, le doigt (12) de verrouillage s'engage en même temps dans deux des réglettes (4, 5, 6, 7) de changement de vitesse et le doigt (2a) de changement de vitesse s'engage de manière positive dans l'une des réglettes (4, 5, 6, 7) de changement de vitesse qui peuvent être déplacées par le doigt (2a) de changement de vitesse, et que le doigt (12) de verrouillage comprend un déblaiement (12a) qui interrompt le doigt (12) de verrouillage dans la direction de pivotement du doigt (12) de verrouillage, et, pendant l'immobilisation de deux réglettes (4, 5, 6, 7) de changement de vitesse qui sont directement adjacentes à la réglette (4, 5, 6, 7) de changement de vitesse qui est librement déplaçable en direction longitudinale, ledit déblaiement (12a) est situé en dessus de la fente (4b) de cette réglette (4, 5, 6, 7) de changement de vitesse qui est librement déplaçable en direction longitudinale, et **en ce que** la réglette (4, 5, 6, 7) de changement de vitesse qui peut être déplacée par le doigt (2a) de changement de vitesse traverse le doigt (12) de verrouillage par le déblaiement (12a) sans venir en contact avec le doigt (12) de verrouillage.
